# EUROPEAN PATENT APPLICATION

(11) **EP 3 687 247 A1**
(43) Date of publication of application: **29.07.2020**
(21) Application number: 18869518.3
(22) Date of filing: 19.10.2018
(51) Int. Cl.: H04W 72/04

(54) **COMMUNICATION METHOD, APPARATUS AND SYSTEM**

(30) Priority: 26.10.2017 CN 201711012803; 14.02.2018 CN 201810152161
(71) Applicant: Huawei Technologies Co., Ltd., Longgang District Shenzhen, Guangdong 518129 (CN)
(72) Inventor: LI, Zhiye, Shenzhen Guangdong 518129 (CN); WANG, Xuehuan, Shenzhen Guangdong 518129 (CN); ZHU, Chunhui, Shenzhen Guangdong 518129 (CN)
(74) Representative: Pfenning, Meinig & Partner mbB
(86) International application number: PCT/CN2018/111024
(87) International publication number: WO 2019/080774

(57) **Abstract**

This application provides a communication method, apparatus, and system, and relates to the field of communications technologies. The method includes: determining, by an SAS server, a network device providing a service to a terminal device, and notifying the network device of an SAS authorization status of the terminal device, where the SAS authorization status is used to indicate whether the SAS server allows the terminal device to use a requested frequency range and a requested power; and after receiving the SAS authorization status notified by the SAS server, managing, by the terminal device, the terminal device based on the SAS authorization status. Because the SAS server can notify the network device of the SAS authorization status of the terminal device, the terminal device can manage the terminal device based on the SAS authorization status after receiving the SAS authorization status. Therefore, this is beneficial to reducing a conflict possibility of scheduling the terminal device by the network device and managing the terminal device by the SAS server, thereby helping improve communication performance.

## Description

### TECHNICAL FIELD

This application relates to the field of communications technologies, and in particular, to a communications method , apparatus, and system.

### BACKGROUND

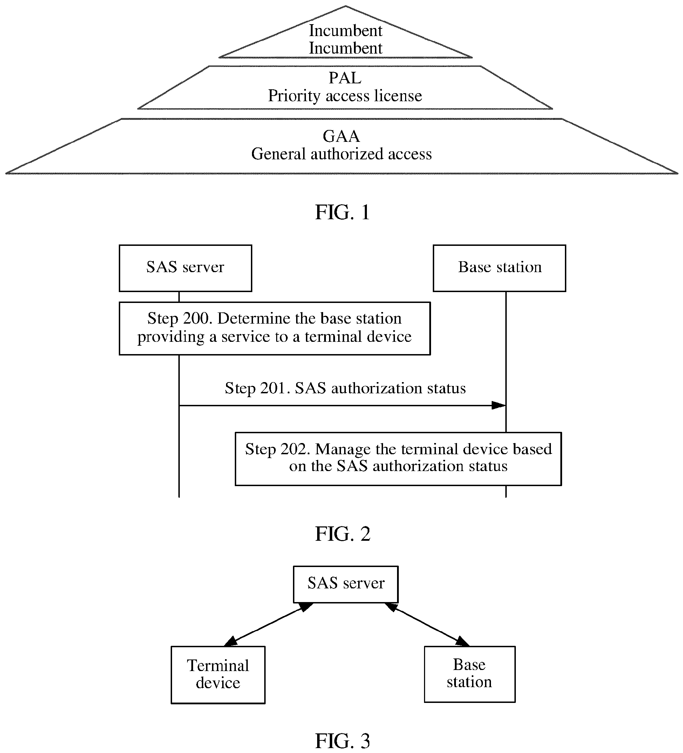

To improve utilization of spectrum resources, a spectrum sharing mechanism is introduced to a frequency band of 3550 MHz (MHz) to 3700 MHz, and the frequency band of 3550 MHz to 3700 MHz is used as a citizens broadband radio service (citizens broadband radio service, CBRS). Specifically, as shown in FIG. 1, devices that perform communication by using the frequency band of 3550 MHz to 3700 MHz are correspondingly classified into three priority levels: an incumbent (Incumbents), a priority access license (priority access license, PAL), and general authorized access (general authorized access, GAA). A device whose priority level is the incumbent enjoys a highest priority of performing communication by using the frequency band of 3550 MHz to 3700 MHz, a device whose priority level is the PAL enjoys a middle priority, and a device whose priority level is the GAA enjoys a lowest priority.

To avoid a case in which communication of the device whose priority level is the PAL and the device whose priority level is the GAA on 3550 MHz to 3700 MHz interfere with communication of the device whose priority level is the incumbent on 3550 MHz to 3700 MHz, the device whose priority level is the PAL and the device whose priority level is the GAA need to access a spectrum access system (spectrum access system, SAS) server. After the SAS server authorizes the device whose priority level is the PAL or the GAA to use a requested maximum effective isotropically radiated power (effective isotropic radiated power, EIRP) in a particular requested frequency range of 3550 MHz to 3700 MHz, the device whose priority level is the PAL or the GAA can perform communication by using the maximum EIRP in the requested frequency range.

A device that accesses the SAS server is usually referred to as a citizens broadband radio service device (citizens broadband radio service, CBSD). Usually, a base station, an access point (access point, AP), or the like only needs to serve as the CBSD to access the SAS server, a terminal device does not access the SAS server, and during communication, use of a frequency band and use of a power of the terminal device only need to comply with scheduling of the CBSD. However, in the prior art, for terminal devices whose maximum EIRP exceeds 23 dBm (dBm)/10 MHz, to improve communication quality of the terminal devices, the terminal devices are used as a special type of CBSD, and accept management of the SAS server by accessing the SAS server. Specifically, when the SAS server authorizes, to the terminal devices whose maximum EIRP exceeds 23 dBm/10 MHz, a frequency band and the maximum EIRP that may be used, the terminal devices can perform communication on the authorized frequency band by using a power without exceeding the maximum EIRP. However, the terminal devices need to both comply with the management of the SAS server and accept scheduling of a network device, for example, a base station. When managing the terminal devices and scheduling the terminal devices by the SAS server and the network device respectively conflict with each other, the communication of the terminal devices may fail, thereby reducing communication performance.

### SUMMARY

Embodiments of this application provide a communication method, apparatus, and system, and this is beneficial to reducing a conflict possibility of scheduling a terminal device by a network device and managing the terminal device by an SAS server, thereby helping improve communication performance.

According to a first aspect, a communication method in an embodiment of this application includes:
determining, by an SAS server, a network device providing a service to a terminal device, and notifying the network device of an SAS authorization status of the terminal device, where the SAS authorization status is used to indicate whether the SAS server allows the terminal device to use a requested frequency range and a requested power.

In this embodiment of this application, because the SAS server can notify the network device of the SAS authorization status of the terminal device, this is beneficial to reducing a conflict possibility of scheduling the terminal device by the network device and managing the terminal device by the SAS server, thereby helping improve communication performance.

It should be noted that in this embodiment of this application, the frequency range requested by the terminal device is usually a frequency range of a cell in which the network device provides the service to the terminal device. However, the frequency range requested by the terminal device may be alternatively a particular frequency range that actually needs to be requested by the terminal device, but not the frequency range of the cell in which the network device provides the service to the terminal device. The power requested by the terminal device is usually a maximum EIRP. The maximum EIRP is a maximum value of a power that can be used by the terminal device during actual communication. Optionally, the maximum EIRP may be a maximum value of a power that can be supported by the terminal device, or may be a particular power that needs to be requested based on an actual situation and that is not greater than the maximum value of the power that can be supported by the terminal device. This is not limited in this embodiment of this application.

In addition, it should be further noted that in this embodiment of this application, the SAS server may be triggered, in the following manners, to notify the network device of the SAS authorization status of the terminal device. In an optional implementation, the SAS server actively notifies the network device of the SAS authorization status of the terminal device. In another optional manner, after receiving an authorization status notification request sent by the network device, the SAS server notifies the network device of the SAS authorization status of the terminal device. Specifically, a specific manner in which the SAS server is triggered to notify the network device of the SAS authorization status of the terminal device is determined based on a pre-configured rule or algorithm.

In a possible design, the SAS authorization status is an SAS authorization success, the SAS authorization success is used to indicate that the SAS server allows the terminal device to use a maximum EIRP in a frequency range of a first cell, and the first cell is a cell in which the network device provides the service to the terminal device.

In a possible design, the SAS authorization status is an SAS authorization failure, the SAS authorization failure is used to indicate that the SAS server forbids the terminal device from using a maximum EIRP in a frequency range of a second cell, and the second cell is a cell in which the network device provides the service to the terminal device.

It should be noted that optionally, in this embodiment of this application, the SAS authorization failure may include two cases: an SAS authorization rejection and an SAS authorization interrupt. The SAS authorization rejection indicates that the SAS server directly rejects the terminal device to use the requested frequency range and the requested power, and the SAS authorization interrupt indicates that after allowing the terminal device to use the requested frequency range and the requested power, the SAS server forbids or stops the terminal device from using the requested frequency range and the requested power. Specifically, the SAS authorization interrupt includes two cases: an SAS authorization pause and an SAS authorization stop. The SAS authorization pause indicates that the SAS server forbids or stops, in a particular period of time, the terminal device from using the maximum EIRP in an authorized frequency range. In the period of time, there may be no information exchange between the terminal device and the SAS server, or the terminal device and the SAS server may exchange a heartbeat response by using a small power. After the period of time expires, the terminal device may continue using the maximum EIRP in the frequency range authorized before the SAS authorization pause, and does not need to apply for an authorization from the SAS server again. The SAS authorization stop indicates that there is no message exchange between the SAS server and the terminal device. If the terminal device needs to continue using the maximum EIRP in the frequency range authorized before the SAS authorization pause, the terminal device needs to apply for the authorization from the SAS server again.

A frequency range obtained after the SAS server allows the terminal device to use the requested frequency range may be referred to as the authorized frequency range, and a power obtained after the SAS server allows the terminal device to use the requested power may be referred to as an authorized power.

In a possible design, the SAS authorization status is an SAS authorization release, the SAS authorization release is used to indicate that the SAS server stops the terminal device from using a maximum EIRP in a frequency range of a third cell, and the third cell is a cell in which the network device provides the service to the terminal device.

It should be noted that in this embodiment of this application, the SAS authorization release indicates that after the SAS server allows the terminal device to use the requested frequency range and the requested power, the terminal device actively stops using the authorized frequency range and the authorized power, and then the SAS server allows the terminal device to stop using the authorized frequency range and the authorized power.

In a possible design, the SAS server may determine, in the following manners, the network device providing the service to the terminal device.

The SAS server obtains, based on a first identifier through a pre-stored mapping relationship table, a second identifier corresponding to the first identifier, and determines that a network device identified by the second identifier is the network device providing the service to the terminal device, where the first identifier is an identifier of the network device in a mobile communications system, and the second identifier is an identifier of the network device in an SAS. The foregoing technical solutions are beneficial to simplifying a manner in which the SAS server determines the network device providing the service to the terminal device.

In a possible design, the SAS server receives the first identifier sent by the terminal device or a region agent. The foregoing technical solution is beneficial to obtaining the identifier of the network device in the mobile communications system by the SAS server. It should be noted that in this embodiment of this application, the region agent may also be referred to as a domain proxy. A name of the region agent is not limited in this embodiment of this application. A specific region agent may be the network device (for example, a base station), or a network management device, for example, a mobility management entity (mobility management entity, MME).

According to a second aspect, a communication method in an embodiment of this application includes:
receiving, by a network device, an SAS authorization status notified by an SAS server, and managing a terminal device based on the SAS authorization status, where the SAS authorization status is used to indicate whether the SAS server allows the terminal device to use a requested frequency range and a requested power.

Because the network device can manage the terminal device based on the SAS authorization status notified by the SAS server, this is beneficial to reducing a conflict possibility of scheduling the terminal device by the network device and managing the terminal device by the SAS server, thereby helping improve communication performance.

In a possible design, the SAS authorization status is an SAS authorization success, the SAS authorization success is used to indicate that the SAS server allows the terminal device to use a maximum EIRP in a frequency range of a first cell, and the first cell is a cell in which the network device provides a service to the terminal device. In this case, the network device identifies the terminal device as a high power terminal device based on a case in which the SAS authorization status is the SAS authorization success. The foregoing technical solution is beneficial to identifying specific terminal devices as high power terminal devices by the network device when managing the terminal device.

In a possible design, the SAS authorization status is an SAS authorization failure, the SAS authorization failure is used to indicate that the SAS server forbids the terminal device from using a maximum EIRP in a frequency range of a second cell, and the second cell is a cell in which the network device provides a service to the terminal device. In this case, the network device schedules the terminal device from the second cell to a third cell based on a case in which the SAS authorization status is the SAS authorization failure, or communication of the terminal device in the frequency range of the second cell, where the frequency range of the second cell is different from a frequency range of the third cell. In a case of the SAS authorization failure of the terminal device, the network device schedules the terminal device to another frequency range for communication, or stops communication in a current frequency range, and this is beneficial to reducing a conflict possibility of scheduling the terminal device by the network device and managing the terminal device by the SAS server, thereby helping improve communication performance.

In a possible design, the SAS authorization status is an SAS authorization release, the SAS authorization release is used to indicate that the SAS server stops the terminal device from using a maximum EIRP in a frequency range of a fourth cell, and the fourth cell is a cell in which the network device provides a service to the terminal device.

To help the SAS server obtain an identifier of the network device in a mobile communications system, in a possible design, the network device sends a first identifier to the SAS server, where the first identifier is an identifier of the network device in the mobile communications system.

In addition, another possible implementation of obtaining the identifier of the network device in the mobile communications system by the SAS server is:
obtaining, by the terminal device, the first identifier of the network device, where the first identifier is an identifier of the network device in the mobile communications system, and sending the first identifier to the SAS server.

According to a third aspect, an SAS server in an embodiment of this application includes a processing module and a communications module. The processing module is configured to determine a network device providing a service to a terminal device. The communications module is configured to notify the network device of an SAS authorization status of the terminal device, where the SAS authorization status is used to indicate whether the SAS server allows the terminal device to use a requested frequency range and a requested power.

In a possible design, the SAS authorization status is an SAS authorization success, the SAS authorization success is used to indicate that the SAS server allows the terminal device to use a maximum EIRP in a frequency range of a first cell, and the first cell is a cell in which the network device provides the service to the terminal device.

In a possible design, the SAS authorization status is an SAS authorization failure, the SAS authorization failure is used to indicate that the SAS server forbids the terminal device from using a maximum EIRP in a frequency range of a second cell, and the second cell is a cell in which the network device provides the service to the terminal device.

In a possible design, the SAS authorization status is an SAS authorization release, the SAS authorization release is used to indicate that the SAS server stops the terminal device from using a maximum EIRP in a frequency range of a third cell, and the third cell is a cell in which the network device provides the service to the terminal device.

In a possible design, the processing module is specifically configured to: obtain, based on a first identifier through a pre-stored mapping relationship table, a second identifier corresponding to the first identifier, and determine that a network device identified by the second identifier is the network device providing the service to the terminal device, where the first identifier is an identifier of the network device in a mobile communications system, and the second identifier is an identifier of the network device in an SAS.

In a possible design, the communications module is further configured to receive the first identifier sent by the terminal device or a region agent.

It should be noted that in any one of the third aspect and the possible designs of the third aspect, the processing module corresponds to a processor in a hardware device, and the communications module corresponds to a transceiver in the hardware device.

According to another aspect in the embodiments of this application, a chip is further provided. The chip is connected to a memory, and is configured to read and execute a software program stored in the memory, to implement the communication method according to any one of the first aspect and the possible designs of the first aspect.

According to still another aspect in the embodiments of this application, a computer storage medium is further provided, storing a computer program. When executed by a processor, the computer program is used to implement the communication method according to any one of the first aspect and the possible designs of the first aspect.

According to a fourth aspect, a network device in an embodiment of this application includes a processing module and a communications module. The communications module is configured to receive an SAS authorization status notified by an SAS server, where the SAS authorization status is used to indicate whether the SAS server allows a terminal device to use a requested frequency range and a requested power. The processing module is configured to manage the terminal device based on the SAS authorization status.

In a possible design, the SAS authorization status is an SAS authorization success, the SAS authorization success is used to indicate that the SAS server allows the terminal device to use a maximum EIRP in a frequency range of a first cell, and the first cell is a cell in which the network device provides a service to the terminal device. The processing module is specifically configured to identify the terminal device as a high power terminal device based on a case in which the SAS authorization status is the SAS authorization success.

In a possible design, the SAS authorization status is an SAS authorization failure, the SAS authorization failure is used to indicate that the SAS server forbids the terminal device from using a maximum EIRP in a frequency range of a second cell, and the second cell is a cell in which the network device provides a service to the terminal device. The processing module is specifically configured to: schedule the terminal device from the second cell to a third cell based on a case in which the SAS authorization status is the SAS authorization failure, or stop the terminal device from performing communication in the frequency range of the second cell, where the frequency range of the second cell is different from a frequency range of the third cell.

In a possible design, the SAS authorization status is an SAS authorization release, the SAS authorization release is used to indicate that the SAS server stops the terminal device from using a maximum EIRP in a frequency range of a third cell, and the third cell is a cell in which the network device provides a service to the terminal device. The processing module is specifically configured to remove a high power identifier of the terminal device based on a case in which the SAS authorization status is the SAS authorization release.

In a possible design, the communications module is further configured to send a first identifier to the SAS server, where the first identifier is an identifier of the network device in a mobile communications system.

It should be noted that in any one of the fourth aspect and the possible designs of the fourth aspect, the processing module corresponds to a processor in a hardware device, and the communications module corresponds to a transceiver in the hardware device.

According to another aspect in the embodiments of this application, a chip is further provided. The chip is connected to a memory, and is configured to read and execute a software program stored in the memory, to implement the communication method according to any one of the second aspect and the possible designs of the second aspect.

According to still another aspect in the embodiments of this application, a computer storage medium is further provided, storing a computer program. When executed by a processor, the computer program is used to implement the communication method according to any one of the second aspect and the possible designs of the second aspect.

According to a fifth aspect, a communications system in an embodiment of this application includes the SAS server according to any one of the third aspect and the possible designs of the third aspect, and the network device according to any one of the fourth aspect and the possible designs of the fourth aspect.

According to a sixth aspect, a communication method in an embodiment of this application includes:
obtaining, by a terminal device, a first identifier, and sending the first identifier to an SAS server, or sending the first identifier to the SAS server through a region agent, where the first identifier is an identifier of a network device that is in a mobile communications system and that provides a service to the terminal device. The foregoing technical solution is beneficial to obtaining, by the SAS server, the identifier of the network device that is in the mobile communications system and that provides the service to the terminal device.

It should be noted that the region agent in this embodiment of this application may be the network device, for example, a base station, or a network management device such as an MME. This is not limited herein.

In a possible design, the first identifier is added to a registration request of the terminal device. The foregoing technical solution is beneficial to simplifying a manner of sending the first identifier.

According to a seventh aspect, a terminal device in an embodiment of this application includes a processing module and a communications module. The processing module is configured to: after the communications module obtains a first identifier, determine to trigger the communications module to send the first identifier to an SAS server, or to trigger the communications module to send the first identifier to the SAS server through a region agent, where the first identifier is an identifier of a network device that is in a mobile communications system and that provides a service to the terminal device.

In a possible design, the first identifier is added to a registration request of the terminal device.

It should be noted that in any one of the seventh aspect and the possible designs of the seventh aspect, the processing module corresponds to a processor in a hardware device, and the communications module corresponds to a transceiver in the hardware device.

According to another aspect in the embodiments of this application, a chip is further provided. The chip is connected to a memory, and is configured to read and execute a software program stored in the memory, to implement the communication method according to any one of the sixth aspect and the possible designs of the sixth aspect.

According to still another aspect in the embodiments of this application, a computer storage medium is further provided, storing a computer program. When executed by a processor, the computer program is used to implement the communication method according to any one of the sixth aspect and the possible designs of the sixth aspect.

In addition, for technical effects of any possible design in the second aspect to the seventh aspect, refer to technical effects of different designs in the first aspect. Details are not described herein again.

### BRIEF DESCRIPTION OF DRAWINGS

FIG. 1 is a schematic diagram of device priority classification in an SAS according to an embodiment of this application;
FIG. 2 is a schematic flowchart of a communication method according to an embodiment of this application;
FIG. 3 is a schematic diagram of a communications architecture according to an embodiment of this application;
FIG. 4 is a schematic flowchart of a communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic diagram of another communications architecture according to an embodiment of this application;
FIG. 9 is a schematic flowchart of another communication method according to an embodiment of this application;
FIG. 10 is a schematic flowchart of another communication method according to an embodiment of this application;
FIG. 11 is a schematic flowchart of another communication method according to an embodiment of this application;
FIG. 12 is a schematic flowchart of another communication method according to an embodiment of this application;
FIG. 13 is a schematic diagram of another communications architecture according to an embodiment of this application;
FIG. 14 is a schematic flowchart of another communication method according to an embodiment of this application;
FIG. 15 is a schematic diagram of a communications apparatus according to an embodiment of this application;
FIG. 16 is a schematic diagram of another communications apparatus according to an embodiment of this application;
FIG. 17 is a schematic diagram of another communications apparatus according to an embodiment of this application;
FIG. 18 is a schematic diagram of another communications apparatus according to an embodiment of this application;
FIG. 19 is a schematic diagram of another communications apparatus according to an embodiment of this application;
FIG. 20 is a schematic diagram of another communications apparatus according to an embodiment of this application;
FIG. 21 is a schematic diagram of another communications apparatus according to an embodiment of this application; and
FIG. 22 is a schematic diagram of another communications apparatus according to an embodiment of this application.

### DESCRIPTION OF EMBODIMENTS

The following describes embodiments of this application in detail with reference to the accompanying drawings in this specification.

In spectrum sharing, terminal devices whose maximum EIRP exceeds 23 dBm/10 MHz may be used as a special type of CBSD, and accept, by accessing an SAS server, management of the SAS server on a frequency range used by the special type of CBSD for communication. In this case, the terminal devices need to both comply with management of the SAS server and comply with scheduling of a base station. However, the management of the SAS server and the scheduling of the base station may conflict with each other. Consequently, communication of the terminal devices fails.

For example, the terminal devices access a network device through a first cell. If a frequency range of the first cell is in a shared spectrum range, to reduce interference of the terminal devices on another device, the terminal devices need to perform communication by using the maximum EIRP in the frequency range of the first cell, and need to apply for an authorization from the SAS server. If the SAS server does not allow the terminal devices to perform the communication by using the maximum EIRP in the frequency range of the first cell, the terminal devices may hand over to an inter-frequency cell, but the base station may not allow the terminal devices to hand over to an inter-frequency cell. Consequently, communication fails and communication performance is reduced.

In the embodiments of this application, because the SAS server can notify the network device of an SAS authorization status of a terminal device, the network device can correspondingly manage the terminal device based on the SAS authorization status of the terminal device, and this is beneficial to reducing a conflict possibility of scheduling the terminal device by the network device and managing the terminal device by the SAS server, thereby helping improve the communication performance.

It should be understood that the SAS server in the embodiments of this application may be a server including an SAS database, or may be a server including another database. This is not limited in the embodiments of this application. The SAS server in the embodiments of this application is configured to manage a frequency range used by a CBSD, a special CBSD, and the like in a mobile communications system. The mobile communications system may be a global system for mobile communications (global system for mobile communication, GSM), a code division multiple access (code division multiple access, CDMA) system, a wideband code division multiple access (wideband code division multiple access, WCDMA) system, a long term evolution (long term evolution, LTE) system, a next radio (next radio, NR) system, or the like.

It should be understood that the network device mentioned in the embodiments of this application may be a base station, an access point, or a device in communication with a wireless terminal by using one or more sectors on an air interface in an access network. When the network device is the base station, the base station may be configured to mutually convert a received over-the-air frame and an internet protocol (internet protocol, IP) packet and serve as a router between the wireless terminal and a rest portion of the access network, and the rest portion of the access network may include an IP network. The base station may be further configured to coordinate attribute management of the air interface. For example, the base station may be a base transceiver station (base transceiver station, BTS) in the GSM or CDMA system, or may be a NodeB (node B) in the WCDMA system, or may be an evolved NodeB (evolutional node B, eNB) in the LTE system, or a gNB in the NR system. This is not limited in the embodiments of this application.

It should be understood that the terminal device in the embodiments of this application may be a device that is configured to provide a user with voice and/or data connectivity, a handheld device having a wireless connection function, or another processing device connected to a wireless modem. The terminal device in the embodiments of this application may be further customer-premises equipment (customer premises equipment, CPE) or a wireless terminal. The wireless terminal may communicate with one or more core networks through a radio access network (radio access network, RAN). The wireless terminal may be a mobile terminal, such as a mobile phone (also referred to as a "cellular" phone) or a computer having a mobile terminal. For example, the computer having the mobile terminal may be a portable, pocket-sized, handheld, computer built-in, or vehicle-mounted mobile apparatus, which exchanges voice and/or data with the radio access network. For example, the wireless terminal may be further a device such as a personal communications service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The wireless terminal may also be referred to as a system, a subscriber unit (subscriber unit), a subscriber station (subscriber station), a mobile station (mobile station), a mobile console (mobile), a remote station (remote station), an access point (access point, AP), a remote terminal (remote terminal), an access terminal (access terminal), a user terminal (user terminal), a user agent (user agent), a user device (user device), user equipment (user equipment), or the like. This is not limited in the embodiments of this application.

The following specifically describes a communication method in the embodiments of this application by using an example in which the network device is the base station. When the network device is the access point or the device in communication with the wireless terminal by using the one or more sectors on the air interface in the access network, a communication method is similar to the communication method when the network device is the base station. Details are not repeatedly described herein.

As shown in FIG. 2, a communication method in an embodiment of this application includes the following steps.

Step 200. An SAS server determines a base station providing a service to a terminal device.

Optionally, the SAS server may obtain, based on a first identifier from a pre-stored mapping relationship table, a second identifier corresponding to the first identifier, and then the SAS server determines that a base station identified by the second identifier is the base station providing the service to the terminal device. The first identifier is an identifier of the base station in a mobile communications system. For example, in an LTE system, the first identifier may be a global eNB ID. The second identifier is an identifier of the network device in an SAS. For example, the second identifier may be a base transceiver station-citizens broadband radio service device identifier (for example, a BTS-CBSD ID). Specifically, the first identifier may be sent by the terminal device to the SAS server, or may be sent by a region agent, for example the base station providing the service to the terminal device, or a network management device such as an MME, to the SAS server. This is not limited in this embodiment of this application.

It should be noted that the foregoing manner may be used when the SAS server may query the base station providing the service to the terminal device for the first time. Optionally, to improve efficiency of subsequently querying, by the SAS server, the base station providing the service to the terminal, after determining the base station providing the service to the terminal device for the first time, the SAS server establishes a correspondence between the second identifier and an identifier of the terminal device in the SAS. Then, when the SAS server subsequently needs to query the base station providing the service to the terminal device, the SAS server may directly query, through the identifier of the terminal device in the SAS, the base station providing the service to the terminal device. For example, the identifier of the terminal device in the SAS may be a UE-CBSD ID. In addition, optionally, when the base station serving the terminal device is used as the region agent, and directly communicates with the SAS server, the SAS server directly determines that a sender sending a message such as an authorization request or a registration request is the base station providing the service to the terminal device.

Optionally, the SAS server may receive a third identifier sent by the base station, and the third identifier may include one of the following: a group identifier (group ID), a global eNB ID, a hyper text transfer protocol over secure socket layer (hyper text transfer protocol over secure socket layer, https) address, an internet protocol (internet protocol, IP) address, a media access control (media access control, MAC) address, a sequence number, and a geographical location identifier of the base station. The SAS server may further receive a fourth identifier sent by the terminal device, and the fourth identifier may include one of the following: the group ID, the global eNB ID, the https address, the IP address, the MAC address, the sequence number, and the geographical location identifier of the terminal device. There is a correspondence between the third identifier and the fourth identifier. To be specific, the SAS server may determine, based on the third identifier and the fourth identifier, that the base station is the base station providing the service to the terminal device. It should be noted that the third identifier and the fourth identifier may be the same or different provided that there is a correspondence that can be identified by the SAS server. In addition, the third identifier and the fourth identifier may be preset (for example, obtained during installation), obtained through an air interface, or obtained in a routing manner. This is not limited in this embodiment of this application.

It should be noted that the third identifier may be further sent by the base station to the SAS server, or may be sent by the region agent, for example, the network management device of the base station such as the MME, to the SAS server, or may be informed by a professional installation engineer to the SAS. This is not limited in this embodiment of this application. The fourth identifier may be further sent by a terminal to the SAS server, or may be sent by the region agent, for example, the base station providing the service to the terminal device, or the network management device such as the MME, to the SAS server, or may be informed by the professional installation engineer to the SAS. This is not limited in this embodiment of this application.

Step 201. The SAS server notifies the base station of an SAS authorization status of the terminal device, where the SAS authorization status is used to indicate whether the SAS server allows the terminal device to use a requested frequency range and a requested power.

It should be noted that in this embodiment of this application, the frequency range requested by the terminal device is usually a frequency range of a cell in which the base station provides the service to the terminal device. However, in this embodiment of this application, the frequency range requested by the terminal device is not limited to the frequency range of the cell in which the base station provides the service to the terminal device, and the frequency range requested by the terminal device may be further a particular frequency range that actually needs to be requested by the terminal device, but not the frequency range of the cell in which the base station provides the service to the terminal device. The power requested by the terminal device may be usually referred to as a maximum EIRP. The maximum EIRP is a maximum value of a power that can be used by the terminal device during actual communication. Optionally, the maximum EIRP may be a maximum value of a power that can be supported by the terminal device, or may be a particular power that needs to be requested based on an actual situation and that is not greater than the maximum value of the power that can be supported by the terminal device. This is not limited in this embodiment of this application.

Specifically, in this embodiment of this application, optionally, the SAS authorization status may be an SAS authorization success, the SAS authorization success is used to indicate that the SAS server allows the terminal device to use a maximum EIRP in a frequency range of a first cell, and the first cell is a cell in which the base station provides the service to the terminal device.

Optionally, the SAS authorization status may be further an SAS authorization failure, the SAS authorization failure is used to indicate that the SAS server forbids the terminal device from using a maximum EIRP in a frequency range of a second cell, and the second cell is a cell providing the service to the terminal device. It should be noted that optionally, in this embodiment of this application, the SAS authorization failure may include two cases: an SAS authorization rejection and an SAS authorization interrupt. The SAS authorization rejection indicates that the SAS server directly rejects the terminal device to use the requested frequency range and the requested power, and the SAS authorization interrupt indicates that after allowing the terminal device to use the requested frequency range and the requested power, the SAS server forbids or stops the terminal device from using the requested frequency range and the requested power. Specifically, the SAS authorization interrupt may include at least one of the two cases: an SAS authorization pause and an SAS authorization stop. The SAS authorization pause indicates that the SAS server forbids or stops, in a particular period of time, the terminal device from using the maximum EIRP in an authorized frequency range. In the period of time, there may be no information exchange between the terminal device and the SAS server, or the terminal device and the SAS server may exchange a heartbeat response by using a small power. After the period of time expires, the terminal device may continue using the maximum EIRP in the frequency range authorized before the SAS authorization pause, and does not need to apply for an authorization from the SAS server again. The SAS authorization stop indicates that there is no message exchange between the SAS server and the terminal device. If the terminal device needs to continue using the maximum EIRP in the frequency range authorized before the SAS authorization pause, the terminal device needs to apply for the authorization from the SAS server again.

A frequency range obtained after the SAS server allows the terminal device to use the requested frequency range may be referred to as the authorized frequency range, and a power obtained after the SAS server allows the terminal device to use the requested power may be referred to as an authorized power.

Optionally, the SAS authorization status may be alternatively an SAS authorization release, the SAS authorization release is used to indicate that the SAS server stops the terminal device from using a maximum EIRP in a frequency range of a third cell, and the third cell is a cell in which the network device provides the service to the terminal device. It should be noted that in this embodiment of this application, the SAS authorization release indicates that after the SAS server allows the terminal device to use the requested frequency range and the requested power, the terminal device actively stops using the authorized frequency range and the authorized power, and then the SAS server allows the terminal device to stop using the authorized frequency range and the authorized power.

Step 202. After receiving the SAS authorization status notified by the SAS server, the base station manages the terminal device based on the SAS authorization status.

Specifically, when the SAS authorization status is the SAS authorization success, the base station identifies the terminal device as a high power terminal device based on a case in which the SAS authorization status is the SAS authorization success.

When the SAS authorization status is the SAS authorization failure, the base station schedules, based on a case in which the SAS authorization status is the SAS authorization failure, the terminal device from the cell providing the service to the terminal device to another cell, or stops communication of the terminal device in the cell providing the service to the terminal device, and the frequency range of the cell providing the service to the terminal device is different from a frequency range of the another cell. Optionally, the base station may instruct, through radio control signaling (radio resource control, RRC), the terminal device to hand over from the cell providing the service to the terminal device to the another cell, or to stop communication in the cell providing the service to the terminal device.

When the SAS authorization status is the SAS authorization release, the base station removes a high power identifier of the terminal device based on a case in which the SAS authorization status is the SAS authorization release.

In addition, it should be further noted that in this embodiment of this application, the SAS server may be triggered, in the following manners, to notify the base station of the SAS authorization status of the terminal device. Specifically, in an optional implementation, the SAS server actively notifies the base station of the SAS authorization status of the terminal device. In this case, in a possible specific implementation, the SAS server actively notifies the base station of the SAS authorization status of the terminal device when the SAS authorization status of the terminal device changes. In another possible specific implementation, regardless of whether the SAS authorization status of the terminal device changes, the SAS server adds the SAS authorization status of the terminal device to a message sent to the base station each time.

For example, the SAS server and the base station determine, through a heartbeat request (heart beat request) and a heartbeat response (heart beat response), that communication between the SAS server and the base station is normal. Specifically, the base station sends the heartbeat request to the SAS server, and after receiving the heartbeat request, the SAS server sends the heartbeat response to the base station. Therefore, in this embodiment of this application, the SAS server may add the SAS authorization status of the terminal device to the heartbeat response, and send the heartbeat response to the base station. Optionally, when the SAS authorization status of the terminal device changes, the SAS server notifies the base station of the SAS authorization status of the terminal device through the heartbeat response. It should be noted that after the SAS server receives the heartbeat request sent by the base station, if the SAS authorization status of the terminal device does not change, the SAS server may add the SAS authorization status of the terminal device to the heartbeat response sent to the base station, or may not add the SAS authorization status of the terminal device to the heartbeat response sent to the base station. A specific implementation is used by the SAS server may be determined based on a preset algorithm.

In another optional manner, after receiving an authorization status notification request sent by the base station, the SAS server notifies the base station of the SAS authorization status of the terminal device. The authorization status notification request is used to request the SAS server to notify the SAS authorization status of the terminal device.

Specifically, a specific active manner or a specific passive manner of triggering the SAS server to notify the base station of the SAS authorization status of the terminal device is determined based on a pre-configured rule or algorithm.

In this embodiment of this application, in step 200, the SAS server needs to determine the base station providing the service to the terminal device. However, in an implementation, a relationship between the terminal device and the base station may also be determined by the region agent. To be specific, the SAS server may also not need to learn a correspondence between the terminal device and the base station, that is, performing of step 200 is omitted. Then, the SAS authorization status of the terminal device is sent to the region agent, and then is sent by the region agent to the base station providing the service to the terminal device.

The following respectively describes, with reference to different communication scenarios, specific implementations of several communication methods used when the SAS server actively notifies the base station of the SAS authorization status of the terminal device if the SAS authorization status of the terminal device changes. If the communication method used when the SAS server adds the SAS authorization status of the terminal device to the message sent to the base station each time is similar to the communication method of notifying the SAS authorization status of the terminal device by the SAS server when the SAS authorization status of the terminal device changes, a difference between the two communication methods lies in that when the SAS authorization status of the terminal device does not change, the SAS authorization status of the terminal device also needs to be added to the message sent by the SAS server to the base station. Therefore, details are not described herein again.

Communication scenario 1: The terminal device directly communicates with the SAS server, and the base station directly communicates with the SAS server. Specifically, in the communication scenario 1, a communications architecture in this embodiment of this application may be shown in FIG. 3. The communications architecture includes an SAS server, a base station, and a terminal device. A communications protocol used by the SAS server and the base station for communication may be the same as or different from a communications protocol used by the SAS server and the terminal device for communication. This is not limited in this embodiment of this application. For example, the communications protocol used by the SAS server and the base station for communication may be a hyper text transfer protocol over secure socket layer (hyper text transfer protocol over secure socket layer, https), and the communications protocol used by the SAS server and the terminal device for communication may also be the https.

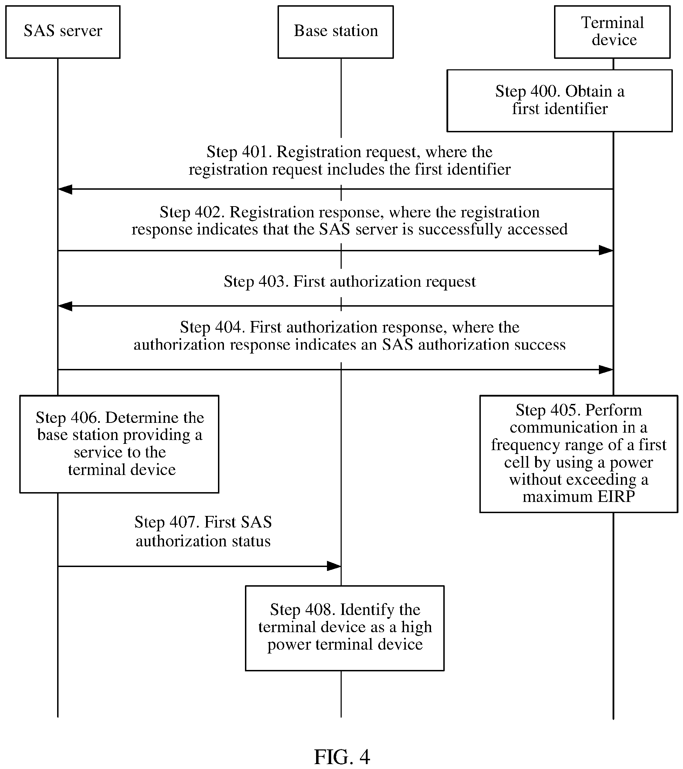

As shown in FIG. 4, a specific implementation of a communication method in an embodiment of this application includes the following steps.

Step 400. A terminal device obtains a first identifier, where the first identifier may be an identifier of a base station that is in a mobile communications system and that provides a service to the terminal device.

For example, the first identifier may be a global base station identifier. Specifically, the terminal device may obtain a public land mobile network (public land mobile network, PLMN) identifier (identification, ID) and a global E-UTRAN cell identifier (E-UTRAN cell identifier, ECI) from the base station, and then determine the global base station identifier based on the PLMN and the ECI, or may directly obtain the global base station identifier from the base station. In addition, the first identifier may be further the PLMN and the ECI.

It should be further noted that in this embodiment of this application, the terminal device may obtain the first identifier after accessing the base station, or obtain the first identifier in a process of accessing the base station. This is not limited in this embodiment of this application.

Step 401. The terminal device sends a registration request to an SAS server, where the registration request includes the first identifier, and the registration request is used to request to access the SAS server.

It should be noted that in this embodiment of this application, in addition to sending the first identifier to the SAS server through the registration request, the terminal device may further send the first identifier to the SAS server through another message, for example, a user-defined new message, or another message in a process in which the terminal device communicates with the SAS server. This is not limited in this embodiment of this application.

In an implementation, to enable the base station to determine a specific terminal device whose SAS authorization status is the SAS authorization status notified by the SAS server, the SAS server further needs to obtain information used to uniquely determine the terminal device. Optionally, the terminal device sends information about the terminal device to the SAS server. For example, the information about the terminal device may include an identifier of the terminal device in the mobile communications system. The identifier of the terminal device in this embodiment of this application may be a globally unique temporary identity (globally unique temporary identity, GUTI). In addition, the information about the terminal device may further include information, for example, a cell radio network temporary identifier (cell radio network temporary identifier, C-RNTI). Specific information about the terminal device may be added to the registration request, and the registration request is sent to the SAS server. For example, the registration request includes the first identifier, and further includes the information about the terminal device. The information about the terminal device may be at least one of the GUTI and the C-RNTI.

In this embodiment of this application, the first identifier and the information about the terminal device may be sent by the terminal device to the SAS server through a message, or may be sent by the terminal device to the SAS server through different messages.

Step 402. After receiving the registration request of the terminal device, the SAS server sends a registration response to the terminal device, where the registration response indicates that the SAS server is successfully accessed.

In addition, to help the SAS server query the base station providing the service to the terminal device, optionally, the SAS server obtains the first identifier in the registration request, allocates a second identifier for a base station identified by the first identifier, and then stores a mapping relationship between the first identifier and the second identifier in a pre-stored mapping relationship table. The second identifier is an identifier of the base station in an SAS.

The second identifier may be a base transceiver station-citizens broadband radio service device identifier (for example, a BTS-CBSD ID). Specifically, a rule for allocating the second identifier by the SAS server for the base station may be preset in the SAS server.

Step 403. After receiving the registration response sent by the SAS server, the terminal device sends a first authorization request to the SAS server, where the first authorization request is used to request the SAS server to authorize the terminal device to use a maximum EIRP in a frequency range of a first cell, and the first cell is a cell providing a service to the terminal device.

It should be noted that to help the SAS server determine whether to license the first authorization request of the terminal device, before sending the first authorization request to the SAS server, the terminal device may further send an installation parameter of the terminal device to the SAS server. Optionally, the terminal device may send the installation parameter of the terminal device to the SAS server through the registration request. For example, the installation parameter of the terminal device may include parameter information, for example, a geographical location of the terminal device, or an antenna pattern of the terminal device. Optionally, the registration request may further include the maximum EIRP of the terminal device.

Step 404. After receiving the first authorization request sent by the terminal device, the SAS server sends a first authorization response to the terminal device, where the first authorization response indicates an SAS authorization success.

Step 405. After receiving the first authorization response, the terminal device performs communication in the frequency range of the first cell by using a power without exceeding the maximum EIRP.

Step 406. The SAS server determines the base station providing the service to the terminal device.

Optionally, the SAS server obtains, based on the first identifier through a pre-stored mapping relationship table, the second identifier corresponding to the first identifier, and determine that a base station identified by the second identifier is the base station providing the service to the terminal device.

Step 407. The SAS server notifies the base station of a first SAS authorization status, the first SAS authorization status is the SAS authorization success, and the SAS authorization success is used to indicate that the SAS server allows the terminal device to use the maximum EIRP in the frequency range of the first cell.

For example, when the SAS server notifies the base station of the first SAS authorization status, a message carrying the first SAS authorization status may include but is not limited to the following parameters: a BTS-CBSD ID, an ECI, a C-RNTI, a UE-CBSD ID, a grant ID, an operationparam, a response type, and a response. The BTS-CBSD ID is the identifier of the base station in the SAS. The grant ID is a grant identifier. The UE-CBSD ID is an identifier of the terminal device in the SAS. The operationparam is a frequency range and a power that are requested by the terminal device. The response is an SAS authorization status, for example, the SAS authorization success. The response type is a message through which the SAS server notifies the base station of the first SAS authorization status.

In this embodiment of this application, the message carrying the first SAS authorization status may be a user-defined new message. The message may be referred to as a status notification message, an SAS authorization status message, or the like. In addition, in this embodiment of this application, the message carrying the first SAS authorization status may be further an existing message that is transmitted when the SAS server and the base station communicate with each other, for example, the heartbeat response.

Step 408. After receiving the first SAS authorization status notified by the SAS server, the base station identifies the terminal device as a high power terminal device based on a case in which the first SAS authorization status is the SAS authorization success.

It should be noted that FIG. 4 is merely described as an example. Specifically, step 400 to step 405 are optional, and there is no necessary sequence between step 405 and step 406, between step 405 and step 407, and between step 405 and step 408.

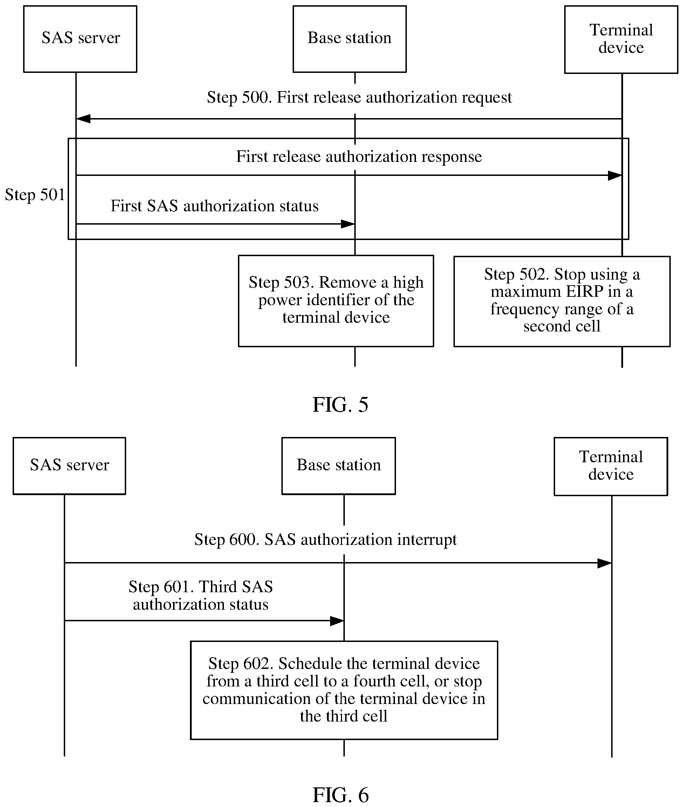

As shown in FIG. 5, another specific implementation of a communication method in an embodiment of this application includes the following steps.

Step 500. A terminal device sends a first release authorization request to an SAS server, the first release authorization request is used to request the SAS server to release an authorization of using a maximum EIRP in a frequency range of a second cell by the terminal device, and the second cell is a cell in which a base station provides a service to the terminal device.

Step 501. After receiving the first release authorization request sent by the terminal device, the SAS server sends a first release authorization response to the terminal device, and notifies the base station of a second SAS authorization status, the second SAS authorization status is an SAS authorization release, and the SAS authorization release is used to indicate that the SAS server stops the terminal device from using the maximum EIRP in the frequency range of the second cell.

In this embodiment of this application, a signaling message used to carry the second SAS authorization status is similar to a message used to carry a first SAS authorization status. Details are not described herein again.

It should be further noted that before the SAS server notifies the base station of the second SAS authorization status, the base station providing the service to the terminal device may be determined according to the communication method shown in FIG. 4. In addition, an identifier that is of the base station in an SAS and that corresponds to an identifier of the terminal device in the SAS may be obtained based on a correspondence of the identifiers in the SAS, and a base station identified by the identifier of the base station in the SAS is determined as the base station providing the service to the terminal device.

For example, when the SAS server notifies the base station of the second SAS authorization status, a message carrying the second SAS authorization status may include but is not limited to the following parameters: a BTS-CBSD ID, an ECI, a C-RNTI, a UE-CBSD ID, a grant ID, an operationparam, a response type, and a response. The BTS-CBSD ID is the identifier of the base station in the SAS. The grant ID is a grant identifier. The UE-CBSD ID is the identifier of the terminal device in the SAS. The operationparam is a frequency range and a power that are requested by the terminal device. The response is an SAS authorization status, for example, the SAS authorization release. The response type is a message through which the SAS server notifies the base station of the first SAS authorization status.

Step 502. After receiving the first release authorization response, the terminal device stops performing communication by using the maximum EIRP in the frequency range of the second cell.

Step 503. After receiving the second SAS authorization status notified by the SAS server, the base station removes a high power identifier of the terminal device based on a case in which the second SAS authorization status is the SAS authorization release.

It should be noted that FIG. 5 is merely described as an example. Specifically, step 500 and step 502 are optional, and there is no necessary sequence between step 502 and step 503. In addition, the embodiment shown in FIG. 5 may be based on the embodiment shown in FIG. 4. To be specific, a person skilled in the art can perform the steps in the embodiment in FIG. 5 on the basis of performing the steps in the embodiment in FIG. 4, to implement a more complete set of method steps.

As shown in FIG. 6, still another specific implementation of a communication method in an embodiment of this application includes the following steps.

Step 600. An SAS server notifies a terminal device of an SAS authorization interrupt, the SAS authorization interrupt is used to indicate that the SAS server forbids the terminal device from using a maximum EIRP in a frequency range of a third cell, and the third cell is a cell in which a base station provides a service to the terminal device.

Optionally, the SAS server may notify the terminal device of the SAS authorization interrupt through a heartbeat response, or notify the terminal device of the SAS authorization interrupt through another message, for example, a newly defined message.

Specifically, after the SAS server authorizes the terminal device to use the maximum EIRP in the frequency range of the third cell, in a subsequent process in which the terminal device performs communication by using the maximum EIRP in the frequency range of the third cell, there may be a case of out-of-synchronization of the terminal device and the SAS server, a case in which the communication of the terminal device by using the maximum EIRP in the frequency range of the third cell interferes with communication of a device whose priority level is higher than that of the terminal device, or the like. To ensure normal communication, the SAS server usually stops the terminal device from using the maximum EIRP in the frequency range of the third cell, thereby causing the SAS authorization interrupt.

Step 601. The SAS server sends a third SAS authorization status to the base station, and the third SAS authorization status is an authorization interrupt.

In this embodiment of this application, a signaling message used to carry the third SAS authorization status is similar to a message used to carry a first SAS authorization status. Details are not described herein again.

It should be further noted that before notifying the base station of the third authorization status, the SAS server further needs to determine the base station providing the service to the terminal device, a specific determining manner is similar to a manner of determining, in the communication method shown in FIG. 5, the base station providing the service to the terminal device. Details are not described herein again.

For example, when the SAS server notifies the base station of the third SAS authorization status, a message carrying the third SAS authorization status may include but is not limited to the following parameters: a BTS-CBSD ID, an ECI, a C-RNTI, a UE-CBSD ID, a grant ID, an operationparam, a response type, and a response. The BTS-CBSD ID is an identifier of the base station in an SAS. The grant ID is a grant identifier. The UE-CBSD ID is an identifier of the terminal device in the SAS. The operationparam is a frequency range and a power that are requested by the terminal device. The response is an SAS authorization status, for example, the SAS authorization interrupt. The response type is a message through which the SAS server notifies the base station of the third SAS authorization status.

Step 602. After receiving the third SAS authorization status, the base station schedules the terminal device from the third cell to a fourth cell based on a case in which the third SAS authorization status is the SAS authorization interrupt, or stops communication of the terminal device in the third cell, and the frequency range of the third cell is different from a frequency range of the fourth cell.

It should be pointed out that in a scenario in which the terminal device supports carrier aggregation, in an implementation, if the third cell is a primary cell of the terminal device, the base station may directly stop the communication of the terminal device in the third cell; or if the third cell is a secondary cell of the terminal device, the base station may schedule the terminal device from the third cell to the fourth cell, where the fourth cell is another secondary cell of the terminal device, or may directly stop the communication of the terminal device in the third cell, to simplify a scheduling manner of the base station.

It should be noted that FIG. 6 is merely described as an example. Specifically, step 600 is optional, and there is no necessary sequence between step 600 and step 601, and between step 600 and step 602.

The embodiment shown in FIG. 6 may be based on the embodiment shown in FIG. 4. To be specific, a person skilled in the art can perform the steps in the embodiments in FIG. 6 on the basis of performing the steps in the embodiments in FIG. 4. In addition, a person skilled in the art can also perform the steps in the embodiment shown in FIG. 5 on the basis of performing the steps in the embodiments in FIG. 4 and the steps in the embodiments in FIG. 6, to implement a more complete set of method steps.

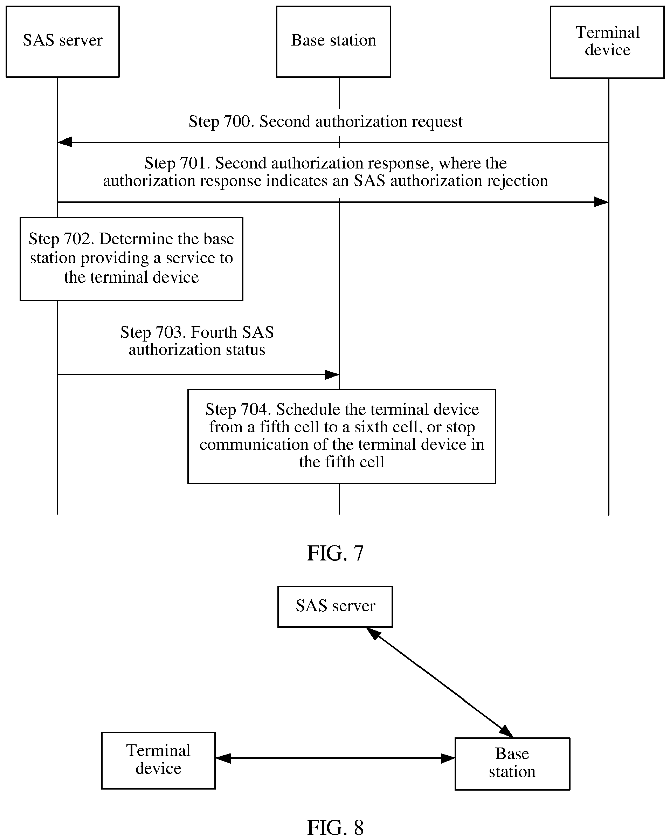

As shown in FIG. 7, yet another specific implementation of a communication method in an embodiment of this application includes the following steps.

Step 700. A terminal device sends a second authorization request to an SAS server, the second authorization request is used to request the SAS server to authorize the terminal device to use a maximum EIRP in a frequency range of a fifth cell, and the fifth cell is a cell providing a service to the terminal device.

Step 701. After receiving the second authorization request, the SAS server sends a second authorization response to the terminal device, the second authorization response indicates an SAS authorization rejection, and the SAS authorization rejection is used to indicate that the SAS server forbids the terminal device from using the maximum EIRP in the frequency range of the fifth cell.

Specifically, because after the SAS server receives the second authorization request, if the SAS server authorizes the terminal device to use the maximum EIRP in the frequency range of the fifth cell, communication of a device having a relatively high priority may be interfered with, in this case, the SAS authorization rejection is caused.

It should be noted that the second authorization request may be an authorization request sent by the terminal device to the SAS server for the first time, or may be an authorization request sent after the SAS server rejects the authorization request sent by the terminal device a plurality of consecutive times. Specifically, whether the SAS server determines the SAS authorization rejection and notifies the SAS authorization rejection to the base station after rejecting the authorization request once or determines the SAS authorization rejection and notifies the SAS authorization rejection to the base station after rejecting the authorization request the plurality of consecutive times may be specifically determined by the SAS server through a predefined determining rule or a current communication situation of a network.

For example, if the SAS server determines the SAS authorization rejection and notifies the SAS authorization rejection to the base station after rejecting the authorization request sent by the terminal device the plurality of consecutive times, specifically, after rejecting the authorization request of the terminal device each time, the SAS server may add a reason for rejecting the authorization request to an authorization response sent to the terminal device, for example, interfering with communication of another device, and the terminal device may reduce a requested power, and then send the authorization request to the SAS server. Optionally, when the power requested by the terminal device is less than or equal to a preset threshold, the SAS server determines the SAS authorization rejection. Alternatively, optionally, when a quantity of times of consecutively rejecting the authorization request of the terminal device is greater than or equal to a preset quantity of times, the SAS server determines the SAS authorization rejection.

Step 702. The SAS server determines the base station providing a service to the terminal device.

It should be noted that a manner of determining, by the SAS server, the base station providing the service to the terminal device is similar to the manner (for example, step 406) of determining, by the SAS server in the communication method shown in FIG. 4, the base station providing the service to the terminal device. Details are not described herein again.

Step 703. The SAS server notifies the base station of a fourth SAS authorization status, and the fourth SAS authorization status is the SAS authorization reject.

For example, when the SAS server notifies the base station of the fourth SAS authorization status, a message carrying the fourth SAS authorization status may include but is not limited to the following parameters: a BTS-CBSD ID, an ECI, a C-RNTI, a UE-CBSD ID, a grant ID, an operationparam, a response type, and a response. The BTS-CBSD ID is an identifier of the base station in an SAS. The grant ID is a grant identifier. The UE-CBSD ID is an identifier of the terminal device in the SAS. The operationparam is a frequency range and a power that are requested by the terminal device. The response is an SAS authorization status, for example, the SAS authorization rejection. The response type is a message through which the SAS server notifies the base station of the fourth SAS authorization status.

In this embodiment of this application, a message carrying the fourth SAS authorization status may be a user-defined new message. The message may be referred to as a status notification message, an SAS authorization status message, or the like. In addition, in this embodiment of this application, the message carrying the fourth SAS authorization status may be further an existing message that is transmitted when the SAS server and the base station communicate with each other, for example, a heartbeat response.

Step 704. After receiving the fourth SAS authorization status, the base station schedules the terminal device from the fifth cell to a sixth cell based on a case in which the fourth SAS authorization status is the SAS authorization rejection, or stops communication of the terminal device in the fifth cell, and the frequency range of the fifth cell is different from a frequency range of the sixth cell.

It should be pointed out that in a scenario in which the terminal device supports carrier aggregation, in an implementation, if the fifth cell is a primary cell of the terminal device, the base station may directly stop the communication of the terminal device in the fifth cell; or if the fifth cell is a secondary cell of the terminal device, the base station may schedule the terminal device from the fifth cell to the sixth cell, where the sixth cell is another secondary cell of the terminal device, or may directly stop the communication of the terminal device in the fifth cell, to simplify a scheduling manner of base station.

It should be noted that FIG. 7 is merely described as an example. Specifically, step 700 is optional, and there is no necessary sequence between step 701 and step 702, between step 701 and step 703, and between step 701 and step 704. In addition, the steps in the embodiment shown in FIG. 7 may be performed on the basis of performing step 401 and step 402 in the embodiment shown in FIG. 4.

Communication scenario 2: An SAS server directly communicates with a region agent. To be specific, a terminal device communicates with the SAS server through the region agent, and the region agent may be a network device, for example, a base station, or a network management device such as an MME. This is not limited in an embodiment of this application. Specifically, in the communication scenario 2, a communications architecture in this embodiment of this application may be shown in FIG. 8 by using an example in which the region agent is the base station providing a service to the terminal device. The communications architecture includes a terminal device, a base station, and an SAS server. Specifically, a communications protocol used by the SAS server and the region agent for communication may be https, or another communications protocol. A communications protocol used by the terminal device and the region agent for communication may be the https, a communications protocol followed in a mobile communications system, or another protocol. This is not limited in this embodiment of this application.

The following describes an example of a communication method in this embodiment of this application by using an example in which the region agent is the base station providing the service to the terminal device.

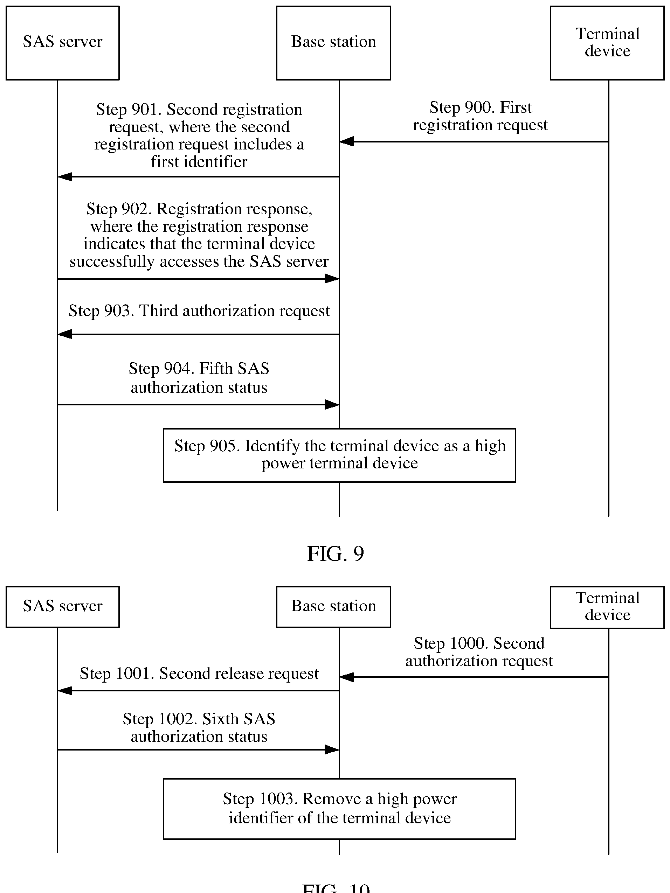

As shown in FIG. 9, a specific implementation of a communication method in an embodiment of this application includes the following steps.

Step 900. A terminal device sends a first registration request to a base station, and the first registration request is used to request a terminal device to access an SAS server.

For example, the terminal device may send a registration request to the base station through RRC signaling. To be specific, the RRC signaling includes the first registration request. In addition, in this embodiment of this application, a message carrying the first registration request may be further an https message, another message, or the like. This is not limited in this embodiment of this application.

Step 901. After receiving the first registration request of the terminal device, the base station sends a second registration request to the SAS server, the second registration request is used to request the terminal device to access the SAS server, the second registration request includes a first identifier, and the first identifier is an identifier of the base station in a mobile communications system.

Optionally, if the first registration request does not include the first identifier, after receiving the first registration request, the base station adds the first identifier to the first registration request, to obtain the second registration request, and then sends the second registration request to the SAS server. In this case, the first registration request is different from the second registration request. If the first registration request includes the first identifier, the second registration request is the same as the first registration request, and the base station serves as a region agent, and forwards, to the SAS server, the first registration request sent by the terminal device, and a forwarding manner may be transparent transmission.

For example, in this embodiment of this application, the first identifier may be a global base station identifier. For example, when the mobile communications system is an LTE system, the global base station identifier may be a global eNB ID.

Specifically, when the first registration request includes the global base station identifier, the terminal device may obtain a PLMN ID and an ECI from the base station, and then determine the global base station identifier based on the PLMN and the ECI, or may directly obtain the global base station identifier from the base station. In addition, the first identifier may be further the PLMN and the ECI. It should be further noted that in this embodiment of this application, the terminal device may obtain the first identifier after accessing the base station, or obtain the first identifier in a process of accessing the base station. This is not limited in this embodiment of this application.

In an implementation, in this embodiment of this application, in addition to sending the first identifier to the SAS server through the second registration request, the terminal device may further send the first identifier to the SAS server through another message, for example, a user-defined new message, or an existing message in a process in which the base station communicates with the SAS server.

It should be further noted that to enable the base station to determine a specific terminal device whose SAS authorization status is the SAS authorization status notified by the SAS server, the SAS server further needs to obtain information used to uniquely determine the terminal device. In an optional implementation, the terminal device sends the information, for example, an identifier of the terminal device in the mobile communications system, about the terminal device to the SAS server through the base station. In this embodiment of this application, the identifier of the terminal device may be a GUTI. In addition, the information about the terminal device may further include information such as a C-RNTI. Specifically, information such as the identifier of the terminal device may be added to the first registration request, and the first registration request is sent to the base station, or the information may be sent to the base station through another message. This is not limited herein.

Step 902. After receiving the second registration request, the SAS server sends a registration response to the base station, and the registration response indicates that the terminal device successfully accesses the SAS server.

Step 903. After receiving the registration response sent by the SAS server, the base station sends a third authorization request to the SAS server, the third authorization request is used to request the SAS server to authorize the terminal device to use a maximum EIRP in a frequency range of a seventh cell, and the seventh cell is a cell providing the service to the terminal device.

In addition, to help the SAS server determine whether to license the third authorization request of the terminal device, the terminal device may further send an installation parameter of the terminal device to the SAS server before sending the third authorization request to the SAS server. Optionally, the base station may send the installation parameter of the terminal device to the SAS server through the second registration request. For example, the installation parameter of the terminal device may include parameter information, for example, a geographical location of the terminal device, or an antenna pattern of the terminal device. Optionally, the second registration request may further include the maximum EIRP of the terminal device.

Step 904. After receiving the third authorization request sent by the base station, the SAS server notifies the base station of a fifth SAS authorization status, the fifth SAS authorization status is an SAS authorization success, and the SAS authorization success is used to indicate that the SAS server allows the terminal device to use the maximum EIRP in the frequency range of the seventh cell.

For example, when the SAS server notifies the base station of the fifth SAS authorization status, a message carrying the fifth SAS authorization status may include but is not limited to the following parameters: a BTS-CBSD ID, an ECI, a C-RNTI, a UE-CBSD ID, a grant ID, an operationparam, a response type, and a response. The BTS-CBSD ID is an identifier of the base station in an SAS. The grant ID is a grant identifier. The UE-CBSD ID is an identifier of the terminal device in the SAS. The operationparam is a frequency range and a power that are requested by the terminal device. The response is an SAS authorization status, for example, the SAS authorization success. The response type is a message through which the SAS server notifies the base station of the fifth SAS authorization status.

In this embodiment of this application, a message carrying the fifth SAS authorization status may be a user-defined new message. The message may be referred to as a status notification message, an SAS authorization status message, or the like. In addition, in this embodiment of this application, the message carrying the fifth SAS authorization status may be further an existing message that is transmitted when the SAS server and the base station communicate with each other, for example, a heartbeat response.

Step 905. After receiving the fifth SAS authorization status notified by the SAS server, the base station identifies the terminal device as a high power terminal device.

In addition, the base station further needs to notify the terminal device of the SAS authorization success, and after receiving the SAS authorization success notified by the base station, the terminal device performs communication in the frequency range of the seventh cell by using a power without exceeding the maximum EIRP.

It should be noted that FIG. 9 is merely described as an example. Specifically, step 900 to step 903 are optional.

As shown in FIG. 10, another specific implementation of a communication method in an embodiment of this application includes the following steps.

Step 1000. A terminal device sends a second release authorization request to a base station, the second release authorization request is used to request an SAS server to release an authorization of using a maximum EIRP in a frequency range of an eighth cell by the terminal device, and the eighth cell is a cell in which the base station provides a service to the terminal device.

Step 1001. After receiving the second release authorization request sent by the terminal device, the base station sends the second release authorization request to the SAS server.

It should be noted that in this case, the base station serves as a region agent, and may forward, to the SAS server in a transparent transmission manner, the second release authorization request sent by the terminal device to the SAS server.

Step 1002. After receiving the second release authorization request, the SAS server notifies the base station of a sixth authorization status, the sixth authorization status is an SAS authorization release, and the SAS authorization release is used to indicate that the SAS server stops the terminal device from using the maximum EIRP in the frequency range of the eighth cell.

For example, when the SAS server notifies the base station of the sixth SAS authorization status, a message carrying the sixth SAS authorization status may include but is not limited to the following parameters: a BTS-CBSD ID, an ECI, a C-RNTI, a UE-CBSD ID, a grant ID, an operationparam, a response type, and a response. The BTS-CBSD ID is an identifier of the base station in an SAS. The grant ID is a grant identifier. The UE-CBSD ID is an identifier of the terminal device in the SAS. The operationparam is a frequency range and a power that are requested by the terminal device. The response is an SAS authorization status, for example, the SAS authorization release. The response type is a message through which the SAS server notifies the base station of the sixth SAS authorization status.

Optionally, in this embodiment of this application, a message carrying the sixth SAS authorization status may be a user-defined new message. The message may be referred to as a status notification message, an SAS authorization status message, or the like. In addition, in this embodiment of this application, the message carrying the sixth SAS authorization status may be further an existing message that is transmitted when the SAS server and the base station communicate with each other, for example, a heartbeat response.

Step 1003. After receiving the sixth SAS authorization status sent by the SAS server, the base station removes a high power identifier of the terminal device based on a case in which the sixth SAS authorization status is the SAS authorization release.

In addition, the base station further notifies the terminal device that the SAS authorization status is the SAS authorization release. After receiving the SAS authorization release notified by the base station, the terminal device stops communication in the frequency range of the eighth cell.

It should be noted that FIG. 10 is merely described as an example. Specifically, step 1000 and step 1001 are optional.

In addition, the embodiment shown in FIG. 10 may be based on the embodiment shown in FIG. 9. To be specific, a person skilled in the art can perform the steps in the embodiments in FIG. 10 on the basis of performing the steps in the embodiments in FIG. 9, to implement a more complete set of method steps.

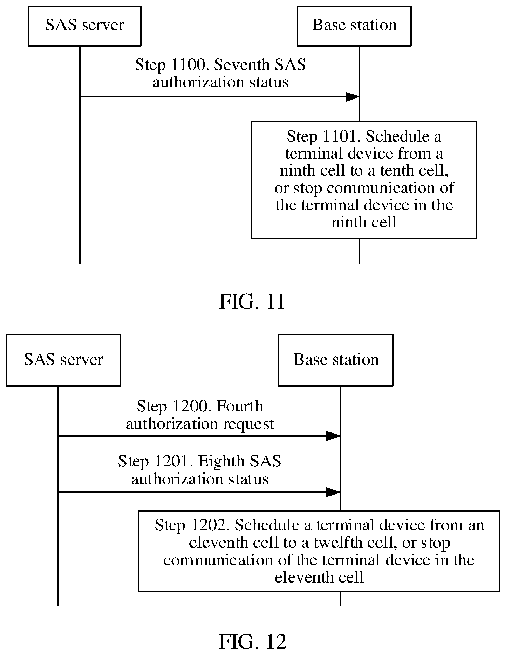

As shown in FIG. 11, still another specific implementation of a communication method in an embodiment of this application includes the following steps.

Step 1100. An SAS server notifies a base station of a seventh SAS authorization status, the seventh SAS authorization status is an SAS authorization interrupt, the SAS authorization interrupt is used to indicate that the SAS server forbids a terminal device from using a maximum EIRP in a frequency range of a ninth cell, and the ninth cell is a cell in which the base station provides a service to the terminal device.

Specifically, after the SAS server authorizes the terminal device to use the maximum EIRP in the frequency range of the ninth cell, in a subsequent process in which the terminal device performs communication by using the maximum EIRP in the frequency range of the ninth cell, there may be a case of out-of-synchronization of the terminal device and the SAS server, a case in which the communication of the terminal device by using the maximum EIRP in the frequency range of the ninth cell interferes with communication of a device whose priority level is higher than that of the terminal device, or the like. To ensure normal communication, the SAS server usually stops the terminal device from using the maximum EIRP in the frequency range of the ninth cell, thereby causing the SAS authorization interrupt.

For example, when the SAS server notifies the base station of the seventh SAS authorization status, a message carrying the seventh SAS authorization status may include but is not limited to the following parameters: a BTS-CBSD ID, an ECI, a C-RNTI, a UE-CBSD ID, a grant ID, an operationparam, a response type, and a response. The BTS-CBSD ID is an identifier of the base station in an SAS. The grant ID is a grant identifier. The UE-CBSD ID is an identifier of the terminal device in the SAS. The operationparam is a frequency range and a power that are requested by the terminal device. The response is an SAS authorization status, for example, the SAS authorization release. The response type is a message through which the SAS server notifies the base station of the seventh SAS authorization status.

Optionally, in this embodiment of this application, a message carrying the seventh SAS authorization status may be a user-defined new message. The message may be referred to as a status notification message, an SAS authorization status message, or the like. In addition, in this embodiment of this application, the message carrying the seventh SAS authorization status may be further an existing message that is transmitted when the SAS server and the base station communicate with each other, for example, a heartbeat response.

Step 1101. After receiving the seventh SAS authorization status sent by the SAS server, the base station schedules the terminal device from the ninth cell to a tenth cell based on a case in which the seventh SAS authorization status is the SAS authorization interrupt, or stops communication of the terminal device in the ninth cell, and the frequency range of the ninth cell is different from a frequency range of the tenth cell.

It should be pointed out that in a scenario in which the terminal device supports carrier aggregation, in an implementation, if the ninth cell is a primary cell of the terminal device, the base station may directly stop the communication of the terminal device in the ninth cell; or if the ninth cell is a secondary cell of the terminal device, the base station may schedule the terminal device from the ninth cell to the tenth cell, where the tenth cell is another secondary cell of the terminal device, or may directly stop the communication of the terminal device in the ninth cell, to simplify a scheduling manner of the base station.

The embodiment shown in FIG. 11 may be based on the embodiment shown in FIG. 9. To be specific, a person skilled in the art can perform the steps in the embodiments in FIG. 11 on the basis of performing the steps in the embodiments in FIG. 9. In addition, a person skilled in the art can also perform the steps in the embodiment shown in FIG. 10 on the basis of performing the steps in the embodiments in FIG. 9 and the steps in the embodiments in FIG. 11, to implement a more complete set of method steps.

As shown in FIG. 12, yet another specific implementation of a communication method in an embodiment of this application includes the following steps.

Step 1200. A base station sends a fourth authorization request to an SAS server, the fourth authorization request is used to request the SAS server to authorize a terminal device to use a maximum EIRP in a frequency range of an eleventh cell, and the eleventh cell is a cell providing a service to the terminal device.

Step 1201. After receiving the fourth authorization request, the SAS server notifies the base station of an eighth SAS authorization status, the eighth SAS authorization status is an SAS authorization rejection, and the SAS authorization rejection is used to indicate that the SAS server forbids the terminal device from using the maximum EIRP in the frequency range of the eleventh cell.

Specifically, because after the SAS server receives the fourth authorization request, if the SAS server authorizes the terminal device to use the maximum EIRP in the frequency range of the eleventh cell, communication of a device having a relatively high priority may be interfered with, in this case, the SAS authorization rejection is caused.

It should be noted that the fourth authorization request may be an authorization request sent by the terminal device to the SAS server for the first time, or may be an authorization request sent after the SAS server rejects the authorization request sent by the terminal device a plurality of consecutive times. Specifically, whether the SAS server determines the SAS authorization rejection and notifies the SAS authorization rejection to the base station after rejecting the authorization request once or determines the SAS authorization rejection and notifies the SAS authorization rejection to the base station after rejecting the authorization request the plurality of consecutive times may be specifically determined by the SAS server through a predefined determining rule or a current communication situation of a network.

For example, if the SAS server determines the SAS authorization rejection and notifies the SAS authorization rejection to the base station after rejecting the authorization request sent by the terminal device the plurality of consecutive times, specifically, after rejecting the authorization request each time, the SAS server may add a reason for rejecting the authorization request to an authorization response sent to the base station serving as a region agent, for example, interfering with communication of another device, and the base station may reduce a requested power, and then send the authorization request to the SAS server. Optionally, when the power requested in the authorization request is less than or equal to a preset threshold, the SAS server determines the SAS authorization rejection. Alternatively, optionally, when a quantity of times of consecutively rejecting the authorization request is greater than or equal to a preset quantity of times, the SAS server determines the SAS authorization rejection.

For example, when the SAS server notifies the base station of the eighth SAS authorization status, a message carrying the eighth SAS authorization status may include but is not limited to the following parameters: a BTS-CBSD ID, an ECI, a C-RNTI, a UE-CBSD ID, a grant ID, an operationparam, a response type, and a response. The BTS-CBSD ID is an identifier of the base station in an SAS. The grant ID is a grant identifier. The UE-CBSD ID is an identifier of the terminal device in the SAS. The operationparam is a frequency range and a power that are requested by the terminal device. The response is an SAS authorization status, for example, the SAS authorization rejection. The response type is a message through which the SAS server notifies the base station of the eighth SAS authorization status.

In this embodiment of this application, a message carrying the eighth SAS authorization status may be a user-defined new message. The message may be referred to as a status notification message, an SAS authorization status message, or the like. In addition, in this embodiment of this application, the message carrying the eighth SAS authorization status may be further an existing message that is transmitted when the SAS server and the base station communicate with each other, for example, a heartbeat response.

Step 1202. After receiving the eighth SAS authorization status, the base station schedules the terminal device from the eleventh cell to a twelfth cell based on a case in which the eighth SAS authorization status is the SAS authorization rejection, or stops communication of the terminal device in the eleventh cell, and the frequency range of the eleventh cell is different from a frequency range of the twelfth cell.

It should be pointed out that in a scenario in which the terminal device supports carrier aggregation, in an implementation, if the eleventh cell is a primary cell of the terminal device, the base station may directly stop the communication of the terminal device in the eleventh cell; or if the eleventh cell is a secondary cell of the terminal device, the base station may schedule the terminal device from the eleventh cell to the twelfth cell, where the twelfth cell is another secondary cell of the terminal device, or may directly stop the communication of the terminal device in the eleventh cell, to simplify a scheduling manner of the base station.

It should be noted that FIG. 12 is merely described as an example. Specifically, step 1200 is optional.

In the communication scenario 2, it should be noted that when the region agent is another device other than the base station providing the service to the terminal device, for example, another network device such as a network management device, the SAS server directly communicates with the region agent. However, a message that needs to be sent by the SAS server to the terminal device or the base station providing the service to the terminal device needs to be first sent to the region agent, and the region agent transparently transmits the message to the terminal device or the base station providing the service to the terminal device. If the terminal device needs to send a message to the SAS server, the message needs to be transparently transmitted to the SAS server through the region agent. Specifically, if the region agent is the another network device other than the base station providing the service to the terminal device, a communication method between the SAS server, the terminal device, and the region agent is similar to the communication method shown in FIG. 9 to FIG. 12 of this application. Details are not described herein again.

In this embodiment of this application, if the SAS server receives an authorization status notification request sent by the base station, and the authorization status notification request is used to request the SAS server to notify the SAS authorization status of the terminal device, the SAS server notifies the base station of the SAS authorization status of the terminal device. The authorization status notification request may be a new message defined between the SAS server and the base station, and is used to request the SAS server to notify the SAS authorization status of the terminal device. A name of the new message is not limited in this embodiment of this application. The authorization status notification request may be alternatively added to the existing message (for example, the heartbeat response) that is transmitted when the SAS server and the base station communicate with each other, and the existing message is sent to the base station. Specifically, in the communication scenario 1, the SAS server may directly notify the base station of the SAS authorization status of the terminal device. In the communication scenario 2, if the base station is the region agent, the SAS server may directly notify the base station of the SAS authorization status of the terminal device; or if the base station is not the region agent, the SAS server transparently transmits the SAS authorization status of the terminal device to the base station through the region agent.

It should be understood that in the foregoing cases, optionally, a manner of determining, by the SAS server, the base station providing the service to the terminal device may be that the SAS server determines that a base station sending an authorization status request is the base station providing the service to the terminal device. It should be further noted that an implementation in which the SAS server notifies the base station of the SAS authorization status of the terminal device is similar to an implementation in which the SAS server notifies the base station of the SAS authorization status of the terminal device in the communication scenario 1 and the communication scenario 2. Details are not described herein again. It should be further noted that a specific implementation of the SAS authorization status is similar to an implementation of the SAS authorization status in the communication scenario 1 and the communication scenario 2. Details are not described herein again.

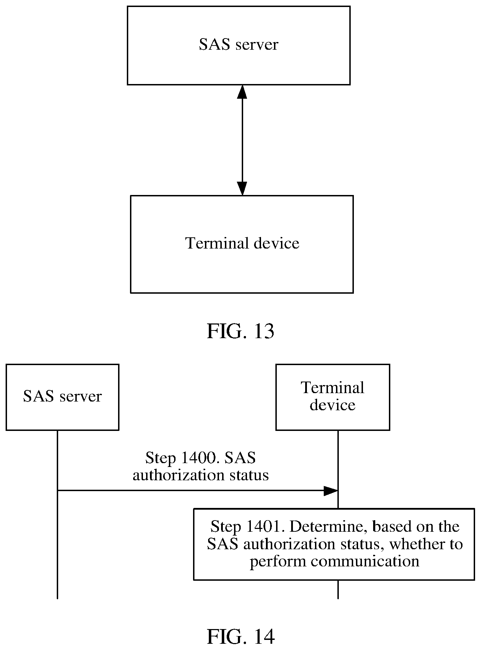

In addition, to reduce a conflict possibility of scheduling the terminal device by the network device and managing the terminal device by the SAS server, a difference from the foregoing embodiments lies in that a special type of CBSD may not be further scheduled by the network device, and the terminal device determines whether to perform a cell handover based on the SAS authorization status and a pre-configured rule or algorithm. Specifically, such scenario may be used in the communications architecture shown in FIG. 13. The communications architecture includes an SAS server and a terminal device.

In the communications architecture shown in FIG. 13, as shown in FIG. 14, a communication method in an embodiment of this application includes the following steps.

Step 1400. An SAS server notifies a terminal device of an SAS authorization status, and the SAS authorization status is used to indicate whether the SAS server allows the terminal device to use a requested frequency range and a requested power.

It should be noted that in this embodiment of this application, the frequency range requested by the terminal device is usually a frequency range of a cell in which a base station provides a service to the terminal device. However, in this embodiment of this application, the frequency range requested by the terminal device is not limited to the frequency range of the cell in which the base station provides the service to the terminal device, and may be further a particular frequency range that actually needs to be requested by the terminal device, but not the frequency range of the cell in which the base station provides the service to the terminal device. The power requested by the terminal device may be usually referred to as a maximum EIRP. The maximum EIRP is a maximum value of a power that can be used by the terminal device during actual communication. Optionally, the maximum EIRP may be a maximum value of a power that can be supported by the terminal device, or may be a particular power that needs to be requested based on an actual situation and that is not greater than the maximum value of the power that can be supported by the terminal device. This is not limited in this embodiment of this application.

Specifically, in this embodiment of this application, optionally, the SAS authorization status may be an SAS authorization success, the SAS authorization success is used to indicate that the SAS server allows the terminal device to use a maximum EIRP in a frequency range of a first cell, and the first cell is a cell in which the base station provides the service to the terminal device.

Optionally, the SAS authorization status may be further an SAS authorization failure, the SAS authorization failure is used to indicate that the SAS server forbids the terminal device from using a maximum EIRP in a frequency range of a second cell, and the second cell is a cell providing a service to the terminal device. It should be noted that optionally, in this embodiment of this application, the SAS authorization failure may include two cases: an SAS authorization rejection and an SAS authorization interrupt. The SAS authorization rejection indicates that the SAS server directly rejects the terminal device to use the requested frequency range and the requested power, and the SAS authorization interrupt indicates that after allowing the terminal device to use the requested frequency range and the requested power, the SAS server forbids or stops the terminal device from using the requested frequency range and the requested power. Specifically, the SAS authorization interrupt may include at least one of the two cases: an SAS authorization pause and an SAS authorization stop. The SAS authorization pause indicates that the SAS server forbids or stops, in a particular period of time, the terminal device from using the maximum EIRP in an authorized frequency range. In the period of time, there may be no information exchange between the terminal device and the SAS server, or the terminal device and the SAS server may exchange a heartbeat response by using a small power. After the period of time expires, the terminal device may continue using the maximum EIRP in the frequency range authorized before the SAS authorization pause, and does not need to apply for an authorization from the SAS server again. The SAS authorization stop indicates that there is no message exchange between the SAS server and the terminal device. If the terminal device needs to continue using the maximum EIRP in the frequency range authorized before the SAS authorization pause, the terminal device needs to apply for the authorization from the SAS server again.

A frequency range obtained after the SAS server allows the terminal device to use the requested frequency range may be referred to as the authorized frequency range, and a power obtained after the SAS server allows the terminal device to use the requested power may be referred to as an authorized power.

Optionally, the SAS authorization status may be alternatively an SAS authorization release, the SAS authorization release is used to indicate that the SAS server stops the terminal device from using a maximum EIRP in a frequency range of a third cell, and the third cell is a cell in which the network device provides the service to the terminal device. It should be noted that in this embodiment of this application, the SAS authorization release indicates that after the SAS server allows the terminal device to use the requested frequency range and the requested power, the terminal device actively stops using the authorized frequency range and the authorized power, and then the SAS server allows the terminal device to stop using the authorized frequency range and the authorized power.

In addition, the SAS server may notify the terminal device of the SAS authorization status through an existing message between the SAS server and the terminal device, for example, an authorization response and a heartbeat response, or through a newly defined message. This is not limited in this embodiment of this application.

Step 1401. After receiving the SAS authorization status notified by the SAS server, the terminal device determines, based on the SAS authorization status, whether to perform communication.

Optionally, if the SAS authorization status is the SAS authorization success, the SAS authorization success is used to indicate that the SAS server allows the terminal device to use the maximum EIRP in the frequency range of the first cell, and the first cell is the cell in which the base station provides the service to the terminal device, the terminal device performs communication based on a case in which the SAS authorization status is the SAS authorization success by using a power without exceeding the maximum EIRP in the frequency range of the first cell. Alternatively, if the SAS authorization status is the SAS authorization failure, the SAS authorization failure is used to indicate that the SAS server forbids the terminal device from using the maximum EIRP in the frequency range of the second cell, and the second cell is the cell providing the service to the terminal device, the terminal device hands over from the second cell to the third cell based on a case in which the SAS authorization status is the SAS authorization failure, where the frequency range of the second cell is different from the frequency range of the third cell, or the terminal device stops, based on the case in which the SAS authorization status is the SAS authorization failure, performing communication in the frequency range of the second cell. Alternatively, if the SAS authorization status is the SAS authorization release, the SAS authorization release is used to indicate that the SAS server stops the terminal device from using a maximum EIRP in a frequency range of a fourth cell, and the fourth cell is a cell in which the network device provides the service to the terminal device, the terminal device stops, based on a case in which the SAS authorization status is the SAS authorization release, performing communication in the frequency range of the fourth cell; or the terminal device hands over from the fourth cell to a fifth cell based on the case in which the SAS authorization status is the SAS authorization release, where the frequency range of the fourth cell is different from a frequency range of the fifth cell.

Optionally, to further reduce a conflict possibility when the base station and the terminal device determine, based on the SAS authorization status, whether to perform a cell handover, the terminal device sends the maximum EIRP or capability information of the terminal device to the base station. The maximum EIRP may be a power requested by the terminal device from the SAS server, and the capability information of the terminal device reflects a power range that can be supported by the terminal device. For example, the capability information of the terminal device may indicate whether a power size supported by the terminal device exceeds 23 dBm/10 MHz.

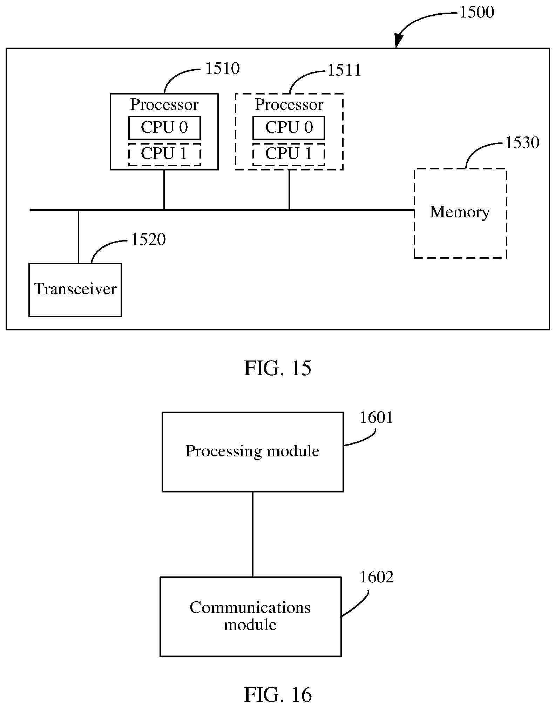

Based on a same idea, FIG. 15 is a schematic diagram of a communications apparatus according to this application. The communications apparatus may be an SAS server, and implement the method performed by the SAS server in any of the foregoing embodiments.

The SAS server 1500 includes at least one processor 1510 and a transceiver 1520. Optionally, the SAS server 1500 further includes a memory 1530. The processor 1510, the transceiver 1520, and the memory 1530 are connected to each other by using a communications bus.

The processor 1510 may be a general central processing unit (Central Processing Unit, CPU), a microprocessor, an application-specific integrated circuit (application specific integrated circuit, ASIC), or one or more integrated circuits configured to control execution of a program in the technical solutions of this application.

The communications bus may include a path for transferring information between the foregoing units.

The transceiver 1520 is configured to communicate with another device or a communications network, and the transceiver 1520 includes a radio frequency circuit.

The memory 1530 may be a read-only memory (read-only memory, ROM) or another type of static storage device that can store static information and a static instruction, for example, a random access memory (random access memory, RAM), or another type of dynamic storage device that can store information and an instruction, or may be an electrically erasable programmable read-only memory (electrically erasable programmable-only memory, EEPROM), a compact disc read-only memory (compact disc read-only memory, CD-ROM), or another optical disk storage medium, optical disc storage medium (including a compact disc, a laser disc, an optical disc, a digital versatile disc, a Blu-ray disc, and the like), magnetic disk storage medium, another magnetic storage device, or any other medium that can be used to carry or store expected program code in a form of an instruction or a data structure and that can be accessed by a computer, but is not limited thereto. The memory 1530 may exist independently and is connected to the processor 1510 by using the communications bus. The memory 1530 may be alternatively integrated with the processor 1510. The memory 1530 is configured to store application program code for performing the technical solutions of this application, and execution of the application program code is controlled by the processor 1510. The processor 1510 is configured to execute the application program code stored in the memory 1530.

During specific implementation, in an embodiment, the processor 1510 may include one or more CPUs, for example, a CPU 0 and a CPU 1 in FIG. 15.

During specific implementation, in an embodiment, the SAS server 1500 may include a plurality of processors, for example, the processor 1510 and a processor 1511 in FIG. 15. Each of the processors may be a single-core processor (single-CPU), or a multi-core processor (multi-CPU). The processor herein may be one or more devices, circuits, and/or processing cores configured to process data (for example, a computer program instruction).

It should be understood that the SAS server 1500 may be configured to implement the steps performed by the SAS server in the communication method in the embodiments of this application. For related features, refer to the foregoing contents. Details are not described herein again.

In this application, function modules of the SAS server may be divided based on the foregoing method examples. For example, the function modules may be divided corresponding to functions, or two or more functions may be integrated into one processing module. The foregoing integrated module may be implemented in a form of hardware, or may be implemented in a form of a software function module. It should be noted that, in this application, module division is an example, and is merely logical function division. In actual implementation, there may be another division manner. For example, when the function modules are divided corresponding to the functions, FIG. 16 is a schematic diagram of a communications apparatus. The communications apparatus may be the SAS server in the foregoing embodiments, and the communications apparatus includes a processing module 1601 and a communications module 1602. It should be noted that the processing module 1601 may be, for example, a processor, and the communications module 1602 may be, for example, a transceiver. The transceiver includes a radio frequency circuit.

According to one aspect, the processing module 1601 is configured to determine a network device providing a service to a terminal device, and the communications module 1602 is configured to send an SAS authorization status of the terminal device to the network device, where the SAS authorization status is used to indicate whether the SAS server allows the terminal device to use a requested frequency range and a requested power.

Optionally, the SAS authorization status is an SAS authorization success, the SAS authorization success is used to indicate that the SAS server allows the terminal device to use a maximum EIRP in a frequency range of a first cell, and the first cell is a cell in which the network device provides the service to the terminal device.

Optionally, the SAS authorization status is an SAS authorization failure, the SAS authorization failure is used to indicate that the SAS server forbids the terminal device from using a maximum EIRP in a frequency range of a second cell, and the second cell is a cell in which the network device provides the service to the terminal device.

Optionally, the SAS authorization status is an SAS authorization release, the SAS authorization release is used to indicate that the SAS server stops the terminal device from using a maximum EIRP in a frequency range of a third cell, and the third cell is a cell in which the network device provides the service to the terminal device.

Optionally, the processing module 1601 is specifically configured to: obtain, based on a first identifier through a pre-stored mapping relationship table, a second identifier corresponding to the first identifier, and determine that a network device identified by the second identifier is the network device providing the service to the terminal device, where the first identifier is an identifier of the network device in a mobile communications system, and the second identifier is an identifier of the network device in an SAS.

Optionally, the communications module 1602 is further configured to receive the first identifier sent by the terminal device or a region agent.

It should be understood that the communications apparatus 1600 may be configured to implement the steps performed by the SAS server in the communication method in the embodiments of this application. For related features, refer to the foregoing contents. Details are not described herein again.

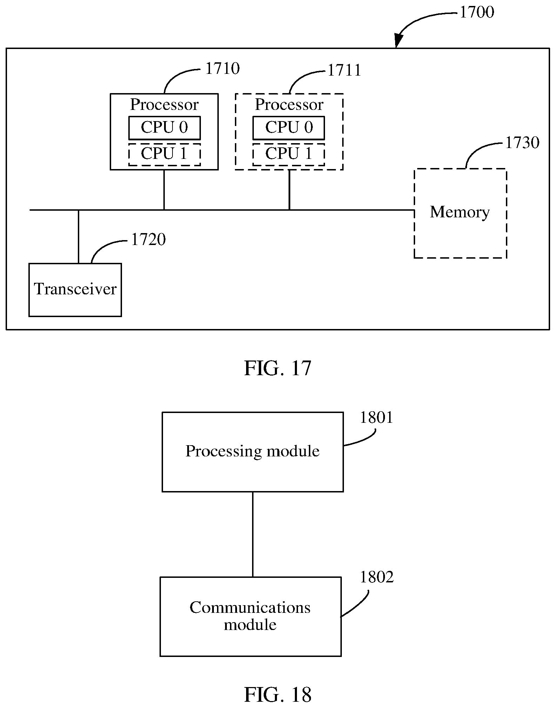

Based on a same idea, FIG. 17 is a schematic diagram of a communications apparatus according to this application. The communications apparatus may be, for example, a network device, and implement the method performed by the network device in any of the foregoing embodiments.

The network device 1700 includes at least one processor 1710 and a transceiver 1720. Optionally, the network device 1700 further includes a memory 1730. The processor 1710, the transceiver 1720, and the memory 1730 are connected to each other by using a communications bus.

The processor 1710 may be a general CPU, a microprocessor, a specific ASIC, or one or more integrated circuits configured to control execution of a program in the technical solutions of this application.

The communications bus may include a path for transferring information between the foregoing units.

The transceiver 1720 is configured to communicate with another device or a communications network, and the transceiver 1720 includes a radio frequency circuit.

The memory 1730 may be a ROM or another type of static storage device that can store static information and a static instruction, for example, a RAM, or another type of dynamic storage device that can store information and an instruction; or may be an EEPROM, a CD-ROM or another optical disk storage medium, optical disc storage medium (including a compact disc, a laser disk, an optical disc, a digital versatile disc, a Blu-ray disc, or the like) and magnetic disk storage medium, another magnetic storage device, or any other medium that can be used to carry or store expected program code in a form of an instruction or a data structure and that can be accessed by a computer, but is not limited thereto. The memory 1730 may exist independently and is connected to the processor 1710 by using the communications bus. The memory 1730 may be alternatively integrated with the processor 1710. The memory 1730 is configured to store application program code for performing the technical solutions of this application, and execution of the application program code is controlled by the processor 1710. The processor 1710 is configured to execute the application program code stored in the memory 1730.

During specific implementation, in an embodiment, the processor 1710 may include one or more CPUs, for example, a CPU 0 and a CPU 1 in FIG. 17.

During specific implementation, in an embodiment, the network device 1700 may include a plurality of processors, for example, the processor 1710 and a processor 1711 in FIG. 17. Each of the processors may be a single-core processor (single-CPU), or a multi-core processor (multi-CPU). The processor herein may be one or more devices, circuits, and/or processing cores configured to process data (for example, a computer program instruction).

It should be understood that the network device 1700 may be configured to implement the steps performed by the network device in the communication method in the embodiments of this application. For related features, refer to the foregoing contents. Details are not described herein again.

In this application, function modules of the network device 1700 may be divided based on the foregoing method examples. For example, the function modules may be divided corresponding to functions, or two or more functions may be integrated into one processing module. The foregoing integrated module may be implemented in a form of hardware, or may be implemented in a form of a software function module. It should be noted that, in this application, module division is an example, and is merely logical function division. In actual implementation, there may be another division manner. For example, when the function modules are divided corresponding to the functions, FIG. 18 is a schematic diagram of a communications apparatus. The communications apparatus may be the network device in the foregoing embodiments, and the communications apparatus includes a processing module 1801 and a communications module 1802. It should be noted that the processing module 1801 may be, for example, a processor, and the communications module 1802 may be, for example, a transceiver. The transceiver includes a radio frequency circuit.

According to one aspect, the communications module 1802 is configured to receive an SAS authorization status notified by an SAS server, where the SAS authorization status is used to indicate whether to allow a terminal device to use a requested frequency range and a requested power. The processing module 1801 is configured to manage the terminal device based on the SAS authorization status.

Optionally, the SAS authorization status is an SAS authorization success, the SAS authorization success is used to indicate that the SAS server allows the terminal device to use a maximum EIRP in a frequency range of a first cell, and the first cell is a cell in which the network device provides a service to the terminal device. The processing module 1801 is specifically configured to identify the terminal device as a high power terminal device based on a case in which the SAS authorization status is the SAS authorization success.

Optionally, the SAS authorization status is an SAS authorization failure, the SAS authorization failure is used to indicate that the SAS server forbids the terminal device from using a maximum EIRP in a frequency range of a second cell, and the second cell is a cell in which the network device provides a service to the terminal device. The processing module 1801 is specifically configured to: schedule the terminal device from the second cell to a third cell based on a case in which the SAS authorization status is the SAS authorization failure, or stop the terminal device from performing communication in the frequency range of the second cell, where the frequency range of the second cell is different from a frequency range of the third cell.

Optionally, the SAS authorization status is an SAS authorization release, the SAS authorization release is used to indicate that the SAS server stops the terminal device from using a maximum EIRP in a frequency range of a third cell, and the third cell is a cell in which the network device provides a service to the terminal device. The processing module 1801 is specifically configured to remove a high power identifier of the terminal device based on a case in which the SAS authorization status is the SAS authorization release.

Optionally, the communications module 1802 is further configured to send a first identifier to the SAS server, where the first identifier is an identifier of the network device in a mobile communications system.

It should be understood that the communications apparatus may be configured to implement the steps performed by the network device in the communication method in the embodiments of this application. For related features, refer to the foregoing contents. Details are not described herein again.

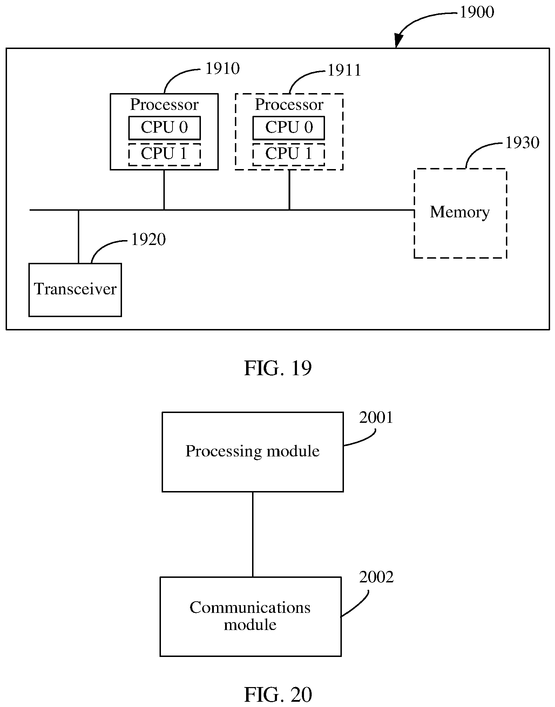

Based on a same idea, FIG. 19 is a schematic diagram of a communications apparatus according to this application. The communications apparatus may be a terminal device, and implement the method performed by the terminal device in any of the foregoing embodiments.

The terminal device 1900 includes at least one processor 1910 and a transceiver 1920. Optionally, the terminal device 1900 further includes a memory 1930. The processor 1910, the transceiver 1920, and the memory 1930 are connected to each other by using a communications bus.

The processor 1910 may be a general CPU, a microprocessor, a specific ASIC, or one or more integrated circuits configured to control execution of a program in the technical solutions of this application.

The communications bus may include a path for transferring information between the foregoing units.

The transceiver 1920 is configured to communicate with another device or a communications network, and the transceiver 1920 includes a radio frequency circuit.

The memory 1930 may be a ROM or another type of static storage device that can store static information and a static instruction, for example, a RAM, or another type of dynamic storage device that can store information and an instruction; or may be an EEPROM, a CD-ROM or another optical disk storage medium, optical disc storage medium (including a compact disc, a laser disk, an optical disc, a digital versatile disc, a Blu-ray disc, or the like) and magnetic disk storage medium, another magnetic storage device, or any other medium that can be used to carry or store expected program code in a form of an instruction or a data structure and that can be accessed by a computer, but is not limited thereto. The memory 1030 may exist independently and is connected to the processor 1910 by using the communications bus. The memory 1930 may be alternatively integrated with the processor 1910. The memory 1930 is configured to store application program code for performing the technical solutions of this application, and execution of the application program code is controlled by the processor 1910. The processor 1910 is configured to execute the application program code stored in the memory 1930.

During specific implementation, in an embodiment, the processor 1910 may include one or more CPUs, for example, a CPU 0 and a CPU 1 in FIG. 19.

During specific implementation, in an embodiment, the terminal device 1900 may include a plurality of processors, for example, the processor 1910 and a processor 1911 in FIG. 19. Each of the processors may be a single-core processor (single-CPU), or a multi-core processor (multi-CPU). The processor herein may be one or more devices, circuits, and/or processing cores configured to process data (for example, a computer program instruction).

It should be understood that the terminal device 1900 may be configured to implement the steps performed by the terminal device in the communication method in the embodiments of this application. For related features, refer to the foregoing contents. Details are not described herein again.

In this application, function modules of the terminal device may be divided based on the foregoing method examples. For example, the function modules may be divided corresponding to functions, or two or more functions may be integrated into one processing module. The foregoing integrated module may be implemented in a form of hardware, or may be implemented in a form of a software function module. It should be noted that, in this application, module division is an example, and is merely logical function division. In actual implementation, there may be another division manner. For example, when the function modules are divided corresponding to the functions, FIG. 20 is a schematic diagram of a communications apparatus. The communications apparatus may be the terminal device in the foregoing embodiments, and the communications apparatus includes a processing module 2001 and a communications module 2002. It should be noted that the processing module 2001 may be, for example, a processor, and the communications module 2002 may be, for example, a transceiver. The transceiver includes a radio frequency circuit.

According to one aspect, the processing module 2001 is configured to: after the communications module 2002 obtains a first identifier, determine to trigger the communications module 2002 to send the first identifier to an SAS server, or to trigger the communications module 2002 to send the first identifier to the SAS server through a region agent, where the first identifier is an identifier of a network device that is in a mobile communications system and that provides a service to the terminal device.

Optionally, the first identifier is added to a registration request of the terminal device.

It should be understood that the terminal device may be configured to implement the steps performed by the terminal device in the communication method in the embodiments of this application. For related features, refer to the foregoing contents. Details are not described herein again.

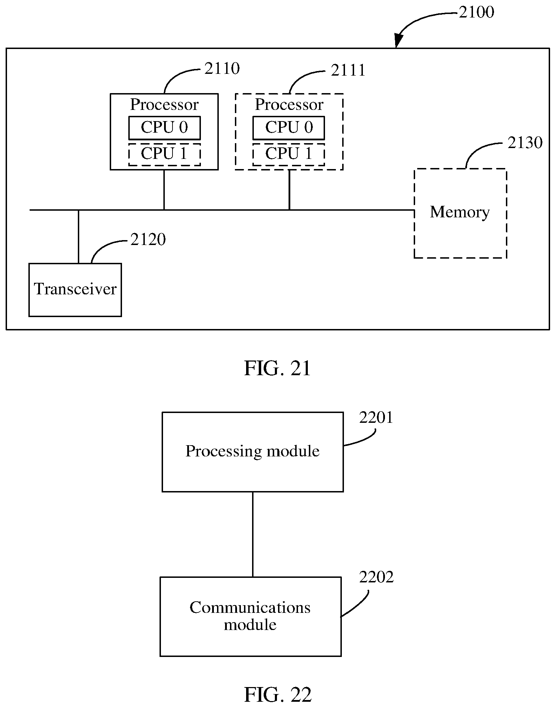

Based on a same idea, FIG. 21 is a schematic diagram of another communications apparatus according to this application. The communications apparatus may be a terminal device, and implement the method performed by the terminal device in the communication method shown in FIG. 14.

The terminal device 2100 includes at least one processor 2110 and a transceiver 2120. Optionally, the terminal device 2100 further includes a memory 2130. The processor 2110, the transceiver 2120, and the memory 2130 are connected to each other by using a communications bus.

The processor 2110 may be a general CPU, a microprocessor, a specific ASIC, or one or more integrated circuits configured to control execution of a program in the technical solutions of this application.

The communications bus may include a path for transferring information between the foregoing units.

The transceiver 2120 is configured to communicate with another device or a communications network, and the transceiver 2120 includes a radio frequency circuit.

The memory 2130 may be a ROM or another type of static storage device that can store static information and a static instruction, for example, a RAM, or another type of dynamic storage device that can store information and an instruction; or may be an EEPROM, a CD-ROM or another optical disk storage medium, optical disc storage medium (including a compact disc, a laser disk, an optical disc, a digital versatile disc, a Blu-ray disc, or the like) and magnetic disk storage medium, another magnetic storage device, or any other medium that can be used to carry or store expected program code in a form of an instruction or a data structure and that can be accessed by a computer, but is not limited thereto. The memory 1030 may exist independently and is connected to the processor 2110 by using the communications bus. The memory 2130 may be alternatively integrated with the processor 2110. The memory 2130 is configured to store application program code for performing the technical solutions of this application, and execution of the application program code is controlled by the processor 2110. The processor 2110 is configured to execute the application program code stored in the memory 2130.

During specific implementation, in an embodiment, the processor 2110 may include one or more CPUs, for example, a CPU 0 and a CPU 1 in FIG. 21.

During specific implementation, in an embodiment, the terminal device 2100 may include a plurality of processors, for example, the processor 2110 and a processor 2111 in FIG. 21. Each of the processors may be a single-core processor (single-CPU), or a multi-core processor (multi-CPU). The processor herein may be one or more devices, circuits, and/or processing cores configured to process data (for example, a computer program instruction).

It should be understood that the terminal device 2100 may be configured to implement the steps performed by the terminal device in the communication method shown in FIG. 14 in the embodiments of this application. For related features, refer to the foregoing contents. Details are not described herein again.

In this application, function modules of the terminal device may be divided based on the foregoing method examples. For example, the function modules may be divided corresponding to functions, or two or more functions may be integrated into one processing module. The foregoing integrated module may be implemented in a form of hardware, or may be implemented in a form of a software function module. It should be noted that, in this application, module division is an example, and is merely logical function division. In actual implementation, there may be another division manner. For example, when the function modules are divided corresponding to the functions, FIG. 22 is a schematic diagram of a communications apparatus. The communications apparatus may be the terminal device in the communication method shown in FIG. 14 in the embodiments of this application, and the communications apparatus includes a processing module 2201 and a communications module 2202. It should be noted that the processing module 2201 may be, for example, a processor, and the communications module 2202 may be, for example, a transceiver. The transceiver includes a radio frequency circuit.

According to one aspect, the communications module 2202 is configured to receive an SAS authorization status notified by an SAS server, where the SAS authorization status is used to indicate whether the SAS server allows the terminal device to use a requested frequency range and a requested power. The processing module 2201 is configured to determine, based on the received SAS authorization status, whether to perform communication.

Optionally, the communications module 2202 is further configured to send a maximum EIRP or capability information of the terminal device to a network device.

Optionally, if the SAS authorization status is an SAS authorization success, the SAS authorization success is used to indicate that the SAS server allows the terminal device to use the maximum EIRP in a frequency range of a first cell, and the first cell is a cell in which the network device provides a service to the terminal device, the processing module 2201 is specifically configured to perform communication based on a case in which the SAS authorization status is the SAS authorization success by using a power without exceeding the maximum EIRP in the frequency range of the first cell. Alternatively, if the SAS authorization status is an SAS authorization failure, the SAS authorization failure is used to indicate that the SAS server forbids the terminal device from using the maximum EIRP in a frequency range of a second cell, and the second cell is a cell providing a service to the terminal device, the processing module 2201 is specifically configured to hand over from the second cell to a third cell based on a case in which the SAS authorization status is the SAS authorization failure, where the frequency range of the second cell is different from a frequency range of the third cell, or the processing module 2201 is specifically configured to stop, based on the case in which the SAS authorization status is the SAS authorization failure, performing communication in the frequency range of the second cell. Alternatively, if the SAS authorization status is an SAS authorization release, the SAS authorization release is used to indicate that the SAS server stops the terminal device from using the maximum EIRP in a frequency range of a fourth cell, and the fourth cell is a cell in which the network device provides the service to the terminal device, the processing module 2201 is specifically configured to stop, based on a case in which the SAS authorization status is the SAS authorization release, performing communication in the frequency range of the fourth cell. Alternatively, the processing module 2201 is specifically configured to hand over from the fourth cell to a fifth cell based on the case in which the SAS authorization status is the SAS authorization release, where the frequency range of the fourth cell is different from a frequency range of the fifth cell.

It should be understood that the terminal device may be configured to implement the steps performed by the terminal device in the communication method shown in FIG. 14 in the embodiments of this application. For related features, refer to the foregoing contents. Details are not described herein again.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

Although this application is described with reference to the embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

A person skilled in the art should understand that the embodiments of this application may be provided as a method, an apparatus (device), a computer-readable storage medium, or a computer program product. Therefore, this application may use a form of hardware only embodiments, software only embodiments, or embodiments with a combination of software and hardware. They are collectively referred to as "modules" or "systems" herein.

This application is described with reference to the flowcharts and/or block diagrams of the method, the apparatus (device), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by the computer or the processor of any other programmable data processing device generate an apparatus for implementing a specific function in one or more processes in the flowcharts and/or in one or more blocks in the block diagrams.

These computer program instructions may also be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although this application is described with reference to specific features and the embodiments thereof, obviously, various modifications and combinations may be made to them without departing from the spirit and scope of this application. Correspondingly, the specification and accompanying drawings are merely example description of this application defined by the accompanying claims, and is considered as any of or all modifications, variations, combinations or equivalents that cover the scope of this application. Obviously, a person skilled in the art can make various modifications and variations to this application without departing from the spirit and scope of this application. This application is intended to cover these modifications and variations provided that these modifications and variations of this application fall within the scope of the claims of this application and their equivalent technologies.

## Claims

1. A communication method, comprising:
determining, by a spectrum access system SAS server, a network device providing a service to a terminal device;
notifying, by the SAS server, the network device of an SAS authorization status of the terminal device, wherein the SAS authorization status is used to indicate whether the SAS server allows the terminal device to use a requested frequency range and a requested power.

2. The method according to claim 1, wherein the SAS authorization status is an SAS authorization success, the SAS authorization success is used to indicate that the SAS server allows the terminal device to use a maximum effective isotropically radiated power EIRP in a frequency range of a first cell, and the first cell is a cell in which the network device provides the service to the terminal device.

3. The method according to claim 1, wherein the SAS authorization status is an SAS authorization failure, the SAS authorization failure is used to indicate that the SAS server forbids the terminal device from using a maximum EIRP in a frequency range of a second cell, and the second cell is a cell in which the network device provides the service to the terminal device.

4. The method according to claim 1, wherein the SAS authorization status is an SAS authorization release, the SAS authorization release is used to indicate that the SAS server stops the terminal device from using a maximum EIRP in a frequency range of a third cell, and the third cell is a cell in which the network device provides the service to the terminal device.

5. The method according to any one of claims 1 to 4, wherein the determining, by an SAS server, a network device providing a service to a terminal device comprises:
obtaining, by the SAS server based on a first identifier through a pre-stored mapping relationship table, a second identifier corresponding to the first identifier, wherein the first identifier is an identifier of the network device in a mobile communications system, and the second identifier is an identifier of the network device in an SAS; and
determining, by the SAS server, that a network device identified by the second identifier is the network device providing the service to the terminal device.

6. The method according to claim 5, further comprising:
receiving, by the SAS server, the first identifier sent by the terminal device or a region agent.

7. The method according to any one of claims 1 to 4, further comprising:
receiving, by the SAS server, a third identifier sent by the network device or an agent of the network device; and
receiving, by the SAS server, a fourth identifier sent by the terminal device or an agent of the terminal device; and
the determining, by an SAS server, a network device providing a service to a terminal device comprises:
determining, by the SAS server based on the third identifier and the fourth identifier, that the network device is a network device providing the service to the terminal device; wherein
there is a correspondence between the third identifier and the fourth identifier.

8. The method according to claim 7, wherein the third identifier and/or the fourth identifier comprise/comprises one or more of the following identifiers:
a group identifier, a hypertext transfer protocol over secure socket layer https address, an internet protocol IP address, a media access control MAC address, a sequence number, and a geographical location identifier.

9. A communication method, comprising:
receiving, by a network device, an SAS authorization status notified by a spectrum access system SAS server, wherein the SAS authorization status is used to indicate whether the SAS server allows a terminal device to use a requested frequency range and a requested power; and
managing, by the network device, the terminal device based on the SAS authorization status.

10. The method according to claim 9, wherein the SAS authorization status is an SAS authorization success, the SAS authorization success is used to indicate that the SAS server allows the terminal device to use a maximum effective isotropically radiated power EIRP in a frequency range of a first cell, and the first cell is a cell in which the network device provides the service to the terminal device; and
the managing, by the network device, the terminal device based on the SAS authorization status comprises:
identifying, by the network device, the terminal device as a high power terminal device based on a case in which the SAS authorization status is the SAS authorization success.

11. The method according to claim 9, wherein the SAS authorization status is an SAS authorization failure, the SAS authorization failure is used to indicate that the SAS server forbids the terminal device from using a maximum EIRP in a frequency range of a second cell, and the second cell is a cell in which the network device provides the service to the terminal device; and
the managing, by the network device, the terminal device based on the SAS authorization status comprises:
scheduling, by the network device, the terminal device from the second cell to a third cell based on a case in which the SAS authorization status is the SAS authorization failure, or stopping the terminal device from performing communication in the frequency range of the second cell, wherein the frequency range of the second cell is different from a frequency range of the third cell.

12. The method according to claim 9, wherein the SAS authorization status is an SAS authorization release, the SAS authorization release is used to indicate that the SAS server stops the terminal device from using a maximum EIRP in a frequency range of a fourth cell, and the fourth cell is a cell in which the network device provides the service to the terminal device; and
the managing, by the network device, the terminal device based on the SAS authorization status comprises:
removing, by the network device, a high power identifier of the terminal device based on a case in which the SAS authorization status is the SAS authorization release.

13. The method according to any one of claims 9 to 12, further comprising:
sending, by the network device, a first identifier to the SAS server, wherein the first identifier comprises one or more of the following identifiers:
a group identifier, an identifier of the network device in a mobile communications system, a hypertext transfer protocol over secure socket layer https address, an internet protocol IP address, a media access control MAC address, a sequence number, and a geographical location identifier.

14. A communication method, comprising:
sending, by a terminal device, an authorization request, wherein the authorization request is used to request a spectrum access system SAS server to authorize the terminal device to use a requested frequency range and a requested power; and
executing, by the terminal device, management of a network device for the terminal device, wherein the network device provides a service to the terminal device, the management is based on an SAS authorization status of the terminal device, and the SAS authorization status is used to indicate whether the SAS server allows the terminal device to use the requested frequency range and the requested power.

15. The method according to claim 14, wherein the sending, by a terminal device, an authorization request comprises:
sending, by the terminal device, the authorization request to the SAS server; or
sending, by the terminal device, the authorization request to the network device.

16. The method according to claim 14 or 15, further comprising:
sending, by the terminal device, a first identifier to the SAS server, wherein the first identifier is used to indicate a correspondence between the network device and the terminal device to the SAS server.

17. The method according to claim 16, wherein the first identifier comprises one or more of the following identifiers:
a group identifier, an identifier of the network device in a mobile communications system, a hypertext transfer protocol over secure socket layer https address, an internet protocol IP address, a media access control MAC address, a sequence number, and a geographical location identifier.

18. The method according to any one of claims 14 to 17, wherein the SAS authorization status is an SAS authorization success, the SAS authorization success is used to indicate that the SAS server allows the terminal device to use a maximum effective isotropically radiated power EIRP in a frequency range of a first cell, and the first cell is a cell in which the network device provides the service to the terminal device.

19. The method according to any one of claims 14 to 17, wherein the SAS authorization status is an SAS authorization failure, the SAS authorization failure is used to indicate that the SAS server forbids the terminal device from using a maximum EIRP in a frequency range of a second cell, and the second cell is a cell in which the network device provides the service to the terminal device.

20. The method according to claim 18, wherein the SAS authorization status is updated to an SAS authorization release, and the SAS authorization release is used to indicate that the SAS server stops the terminal device from using the maximum EIRP in the frequency range of the first cell.

21. An apparatus, comprising:
a processor, configured to determine a network device providing a service to a terminal device; and
a transceiver, configured to notify the network device of a spectrum access system SAS authorization status of the terminal device, wherein the SAS authorization status is used to indicate whether the apparatus allows the terminal device to use a requested frequency range and a requested power.

22. The apparatus according to claim 21, wherein the SAS authorization status is an SAS authorization success, the SAS authorization success is used to indicate that the apparatus allows the terminal device to use a maximum effective isotropically radiated power EIRP in a frequency range of a first cell, and the first cell is a cell in which the network device provides the service to the terminal device.

23. The apparatus according to claim 21, wherein the SAS authorization status is an SAS authorization failure, the SAS authorization failure is used to indicate that the apparatus forbids the terminal device from using a maximum EIRP in a frequency range of a second cell, and the second cell is a cell in which the network device provides the service to the terminal device.

24. The apparatus according to claim 21, wherein the SAS authorization status is an SAS authorization release, the SAS authorization release is used to indicate that the apparatus stops the terminal device from using a maximum EIRP in a frequency range of a third cell, and the third cell is a cell in which the network device provides the service to the terminal device.

25. The apparatus according to any one of claims 21 to 24, wherein that the processor is configured to determine the network device providing the service to the terminal device specifically comprises:
the processor is configured to: obtain, based on a first identifier through a pre-stored mapping relationship table, a second identifier corresponding to the first identifier, and determine that a network device identified by the second identifier is the network device providing the service to the terminal device, wherein the first identifier is an identifier of the network device in a mobile communications system, and the second identifier is an identifier of the network device in the SAS.

26. The apparatus according to claim 25, wherein the transceiver is further configured to:
receive the first identifier sent by the terminal device or a region agent.

27. The apparatus according to any one of claims 21 to 24, wherein the transceiver is further configured to: receive a third identifier sent by the network device or an agent of the network device, and receive a fourth identifier sent by the terminal device or an agent of the terminal device; and
that the processor is configured to determine the network device providing the service to the terminal device specifically comprises: determining, based on the third identifier and the fourth identifier, that the network device is a network device providing the service to the terminal device; wherein
there is a correspondence between the third identifier and the fourth identifier.

28. The apparatus according to claim 27, wherein the third identifier and/or the fourth identifier comprise/comprises one or more of the following identifiers:
a group identifier, a hypertext transfer protocol over secure socket layer https address, an internet protocol IP address, a media access control MAC address, a sequence number, and a geographical location identifier.

29. The apparatus according to any one of claims 21 to 28, wherein the apparatus is a spectrum access system SAS server.

30. An apparatus, comprising:
a transceiver, configured to receive an SAS authorization status notified by a spectrum access system SAS server, wherein the SAS authorization status is used to indicate whether the SAS server allows a terminal device to use a requested frequency range and a requested power; and
a processor, configured to manage the terminal device based on the SAS authorization status.

31. The apparatus according to claim 30, wherein the SAS authorization status is an SAS authorization success, the SAS authorization success is used to indicate that the SAS server allows the terminal device to use a maximum effective isotropically radiated power EIRP in a frequency range of a first cell, and the first cell is a cell in which the apparatus provides the service to the terminal device; and
that the processor is configured to manage the terminal device based on the SAS authorization status specifically comprises:
the processor is configured to identify the terminal device as a high power terminal device based on a case in which the SAS authorization status is the SAS authorization success.

32. The apparatus according to claim 30, wherein the SAS authorization status is an SAS authorization failure, the SAS authorization failure is used to indicate that the SAS server forbids the terminal device from using a maximum EIRP in a frequency range of a second cell, and the second cell is a cell in which the apparatus provides the service to the terminal device; and
that the processor is configured to manage the terminal device based on the SAS authorization status specifically comprises:
the processor is configured to: schedule the terminal device from the second cell to a third cell based on a case in which the SAS authorization status is the SAS authorization failure, or stop the terminal device from performing communication in the frequency range of the second cell, wherein the frequency range of the second cell is different from a frequency range of the third cell.

33. The apparatus according to claim 30, wherein the SAS authorization status is an SAS authorization release, the SAS authorization release is used to indicate that the SAS server stops the terminal device from using a maximum EIRP in a frequency range of a fourth cell, and the fourth cell is a cell in which the apparatus provides the service to the terminal device; and
that the processor is configured to manage the terminal device based on the SAS authorization status specifically comprises:
the processor is configured to remove a high power identifier of the terminal device based on a case in which the SAS authorization status is the SAS authorization release.

34. The apparatus according to any one of claims 30 to 33, wherein the transceiver is further configured to send a first identifier to the SAS server, and the first identifier comprises one or more of the following identifiers:
a group identifier, an identifier of the network device in a mobile communications system, a hypertext transfer protocol over secure socket layer https address, an internet protocol IP address, a media access control MAC address, a sequence number, and a geographical location identifier.

35. The apparatus according to any one of claims 30 to 34, wherein the apparatus is the network device.

36. An apparatus, comprising:
a transceiver, configured to send an authorization request, wherein the authorization request is used to request a spectrum access system SAS server to authorize the apparatus to use a requested frequency range and a requested power; and
a processor, configured to execute management of a network device for the apparatus, wherein the network device provides a service to the apparatus, the management is based on an SAS authorization status of the apparatus, and the SAS authorization status is used to indicate whether the SAS server allows the apparatus to use the requested frequency range and the requested power.

37. The apparatus according to claim 36, wherein the transceiver is specifically configured to send the authorization request to the SAS server, or send the authorization request to the network device.

38. The apparatus according to claim 36 or 37, wherein the transceiver is further configured to send a first identifier to the SAS server, wherein the first identifier is used to indicate a correspondence between the network device and the terminal device to the SAS server.

39. The apparatus according to claim 38, wherein the first identifier comprises one or more of the following identifiers:
a group identifier, an identifier of the network device in a mobile communications system, a hypertext transfer protocol over secure socket layer https address, an internet protocol IP address, a media access control MAC address, a sequence number, and a geographical location identifier.

40. A communications system, comprising the apparatus according to any one of claims 21 to 29, the apparatus according to any one of claims 30 to 35, and the apparatus according to any one of claims 36 to 39.

41. A chip, wherein the chip is connected to a memory, and is configured to read and execute a software program stored in the memory, to implement the method according to any one of claims 1 to 20.

42. A computer storage medium, storing a computer program, wherein when executed by a processor, the computer program is used to implement the method according to any one of claims 1 to 20.
